(19) Europäisches Patentamt
European Patent Office
Office européen des brevets

(11) **EP 2 669 833 A1**

(12) **EUROPEAN PATENT APPLICATION**
published in accordance with Art. 153(4) EPC

(43) Date of publication:
**04.12.2013 Bulletin 2013/49**

(21) Application number: **12738916.1**

(22) Date of filing: **16.01.2012**

(51) Int Cl.:
**G06F 21/20** (0000.00)     **H04L 9/32** (2006.01)
**H04M 1/667** (2006.01)

(86) International application number:
**PCT/JP2012/050710**

(87) International publication number:
**WO 2012/102111 (02.08.2012 Gazette 2012/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.01.2011 JP 2011015681**

(71) Applicant: **NTT DOCOMO, INC.**
**Chiyoda-ku**
**Tokyo 100-6150 (JP)**

(72) Inventors:
• **TSUKAMOTO, Masakatsu**
**Tokyo 100-6150 (JP)**
• **OTA, Manabu**
**Tokyo 100-6150 (JP)**
• **MORINAGA, Yasuo**
**Tokyo 100-6150 (JP)**
• **HIGUCHI, Takeshi**
**Tokyo 100-6150 (JP)**

(74) Representative: **MERH-IP**
**Matias Erny Reichl Hoffmann**
**Paul-Heyse-Strasse 29**
**80336 München (DE)**

(54) **MOBILE INFORMATION TERMINAL, GRIP CHARACTERISTIC LEARNING METHOD, AND GRIP CHARACTERISTIC AUTHENTICATION METHOD**

(57) A mobile information terminal is provided that can obstruct operations by a third party without obstructing operations by an authorized user when shaking or tilting occurs. The mobile information terminal includes: a gripping-feature sample acquisition part that acquires gripping-feature samples; an acceleration sensor that measures an acceleration; a switch that switches the mobile information terminal between a learning state and an authentication state; a template learning part that learns a user authentication template; a tilt counter that adds a tilt score when an acceleration exceeds a predetermined value, and resets the tilt score to 0 when a result of user authentication indicates an authorized user; a user authentication part that performs user authentication; a score adder/subtractor that adds/subtracts a score when a result of user authentication performed by the user authentication part indicates an unauthorized user; a threshold slider that calculates a revised threshold; a locking determination part that determines that the user authentication fails when the score changes across the revised threshold; and a locking part that locks some or all functions of the mobile information terminal when the user authentication fails.

FIG.4

**Description**

[TECHNICAL FIELD]

The present invention relates to a mobile information terminal, a gripping-feature learning method and a gripping-feature authentication method that acquire a gripping-feature sample when the mobile information terminal is gripped and perform user authentication.

[BACKGROUND ART]

Recently, various types of financial services, such as electronic money, have become more widespread as mobile information terminals have gained higher functionality. In addition, as mobile information terminals have gained higher functionality, the terminals have been used to store many pieces of private information, such as addresses, emails, photos, and website browsing history. Conventionally, security has been maintained for information handled with mobile information terminals by user authentication (hereafter called log-in authentication) performed when starting to use the mobile information terminals. In log-in authentication, however, after user authentication is performed at the start of use, whether the user is the person who has been authenticated is not continuously monitored. Therefore, if the mobile information terminal is used by another person for some reason after log-in authentication, the other person can operate the mobile information terminal without performing log-in authentication. Such a security vulnerability in log-in authentication has been a problem.

To solve this problem, Patent Literature 1 discloses a portable information terminal in which the positions where the user using the terminal grips the terminal when performing user authentication are acquired by a plurality of pressure sensors; if, after user authentication, the positions where the user grips the terminal are shifted by a specified amount or more, the required data input by the user to use a service is invalidated and the validity of the user authentication already performed is cancelled. Therefore, even if the terminal is stolen during the act of inputting data required to use a service after user authentication, the user authentication and the data input by the user are invalidated when the user is not in possession of the terminal. To use a service after the user authentication is invalidated, it is necessary to perform user authentication again. Therefore, this terminal can effectively prevent unauthorized use by a third party.

[PRIOR ART LITERATURE]

[PATENT LITERATURE]

[Patent literature 1]: Japanese Patent Application Laid-Open No. 2001-142849

[SUMMARY OF THE INVENTION]

[PROBLEMS TO BE SOLVED BY THE INVENTION]

However, in the portable information terminal disclosed in Patent Literature 1, when user authentication is performed in an environment in which a large amount of vibration is occurring (for example, inside an electric train), an error arises in the measurement of a gripping-feature of the user due to the vibrations. Further, if user authentication is performed when the user is operating the portable information terminal while taking a posture different to that taken during normal operation (for example, in a state in which the user is lying on user's back), an error arises in a similar manner in the measurement of a gripping-feature due to tilting of the portable information terminal. In addition, it can be considered that if the user operates the portable information terminal in a state in which a charge cable is still connected thereto, the user will grip the portable information terminal in a way that is different to the user's normal way of gripping the portable information terminal. Furthermore, if the temperature of part or all of the casing of the portable information terminal rises during charging, immediately after making a call, or due to being left outdoors or the like, it can be considered that the user will grip the portable information terminal in a way that is different to the user's normal way of gripping the portable information terminal, and similarly to the above description, an error will arise in the measurement of a gripping-feature. Therefore, a problem in the portable information terminal disclosed in Patent Literature 1 is that user authentication that is performed with respect to the authorized user may fail due to the occurrence of an error in measurement of a gripping-feature that is caused by shaking or tilting of the portable information terminal or another disturbance factor.

To solve this problem, a configuration is conceivable in which a disturbance sensor is provided in a portable information terminal, and a gripping-feature acquired at a time when the level of disturbance detected by disturbance sensor falls in a predetermined condition is invalidated and the portable information terminal is immediately locked. By adopting such a configuration, unauthorized use by a third party can be prevented in a case where user authentication cannot be correctly performed due to a large degree of motion in the surrounding environment such as shaking, tilting, or another disturbance factor. However, in this case, even if the authorized user is the person operating the portable information terminal when the terminal is being subjected to shaking, tilting or another disturbance factor or the like that is greater than or equal to a fixed level, the terminal is automatically locked, which is extremely inconvenient for the user.

Therefore, to solve this problem, a configuration is conceivable in which a gripping-feature that is acquired when the level of disturbance detected by the disturbance sensor falls in a predetermined condition is invalidated and, in contrast to the aforementioned method, authentication of the portable information terminal is not performed and the portable information terminal is not locked. By adopting such a configuration, use of the portable information terminal by the authorized user is not obstructed even if user authentication cannot be correctly performed due to a large degree of motion in the surrounding environment such as shaking, tilting, or another disturbance factor. However, in this case, when the portable information terminal is being subjected to shaking, tilting or another disturbance factor or the like that is greater than or equal to a fixed level, use of the portable information terminal is also enabled even when the person operating the portable information terminal is a third party, and consequently the security of the portable information terminal can not be ensured. Furthermore, it is possible for a third party who is aware of this characteristic to maliciously use the portable information terminal without being authenticated, by intentionally shaking the portable information terminal, by performing operations while intentionally tilting the portable information terminal, by operating the portable information terminal in a state in which a charge cable is intentionally connected thereto, or by operating the portable information terminal in a state in which the temperature of all or a part of the casing of the portable information terminal has been intentionally raised, and this constitutes a problem from the security viewpoint. Therefore, an object of the present invention is to provide a mobile information terminal that can obstruct operations by a third party when shaking, tilting, or another disturbance factor or the like is occurring, while at the same time, not obstructing operations by the authorized user when shaking, tilting, or another disturbance factor or the like is occurring.

[MEANS TO SOLVE THE PROBLEMS]

A mobile information terminal of the present invention includes a gripping-feature sample acquisition part, a disturbance sensor, a switch, a template learning part, a tilt counter, a user authentication part, a score adder/subtractor, a threshold slider, a locking determination part and a locking part. The gripping-feature sample acquisition part acquires gripping-feature samples. The disturbance sensor detects a disturbance at a time when the gripping-feature sample acquisition part acquires the gripping-feature sample. The switch switches the terminal between a learning state and an authentication state. The template learning part learns a user authentication template by using the gripping-feature samples acquired by the gripping-feature sample acquisition part, when the terminal is in the learning state. The tilt counter adds a tilt score when the mobile information terminal is in the authentication state and a level of disturbance that is detected is a predetermined condition, and resets the tilt score to 0 when a result of user authentication indicates an authorized user. The user authentication part compares the learned user authentication template with gripping-feature samples to perform user authentication when the terminal is in the authentication state. The score adder/subtractor adds/subtracts a score when the mobile information terminal is in the authentication state and a result of user authentication that the user authentication part performs indicates an unauthorized user. The threshold slider adds/subtracts the tilt score to/from a predetermined threshold to calculate a revised threshold, when the mobile information terminal is in the authentication state. The locking determination part determines that the user authentication fails when the score changes across the revised threshold. The locking part locks some or all of the functions of the terminal if the user authentication fails.

[EFFECTS OF THE INVENTION]

According to a mobile information terminal of the present invention, operations by a third party when shaking, tilting, or another disturbance factor or the like is occurring can be obstructed, while at the same time, not obstructing operations by the authorized user when shaking, tilting, or another disturbance factor or the like is occurring.

[BRIEF DESCRIPTION OF THE DRAWINGS]

Fig. 1 is an example view showing a state in which a portable terminal is gripped, which is related to all embodiments;
Fig. 2 is an example view showing gripping-pressure distributions output from a pressure sensor array built in the portable terminal, which is related to all the embodiments;

Fig. 3A is an example view showing a notification given to the user by the portable terminal when authentication template learning is started, which is related to all the embodiments;

Fig. 3B is an example view showing a notification given to the user by the portable terminal when the user authentication template learning is finished, which is related to all the embodiments;

Fig. 4 is a block diagram showing the structure of a portable terminal according to a first embodiment;

Fig. 5 is a block diagram showing the structure of a portable terminal according to a second embodiment;

Fig. 6 is a block diagram showing the structure of a mobile information terminal according to a third embodiment;

Fig. 7 is a block diagram showing the structure of a mobile information terminal according to a fourth embodiment;

Fig. 8 is a flowchart showing the operation of the mobile information terminal according to the first embodiment in a learning state;

Fig. 9 is a flowchart showing the operation of the mobile information terminals according to the second embodiment in a learning state;

Fig. 10 is a flowchart showing the operation of the mobile information terminal according to the third embodiment in a learning state;

Fig. 11 is a flowchart showing the operation of the portable terminal according to the fourth embodiment in a learning state;

Fig. 12 is a flowchart showing the operation of the portable terminal according to the first embodiment in an authentication state;

Fig. 13 is a flowchart showing the operation of the portable terminal according to the second embodiment in an authentication state;

Fig. 14 is a flowchart showing the operation of the portable terminal according to the third and fourth embodiments in an authentication state;

Fig. 15 is an example view showing modes of the portable terminal and a relationship between the state of the terminal in each mode and an other-person determination line;

Fig. 16 is a view illustrating the operation of a tilt counter, a score adder/subtractor and a threshold slider of the portable terminal according to the first embodiment;

Fig. 17 is a view illustrating the operation of a tilt counter, a score adder/subtractor and a threshold slider of the portable terminal according to the first embodiment;

Fig. 18 is a view illustrating the operation of a tilt counter, a score adder/subtractor and a threshold slider of the portable terminal according to the second embodiment;

Fig. 19 is a view illustrating the operation of a tilt counter, a score adder/subtractor and a threshold slider of the portable terminal according to the second embodiment;

Fig. 20 is a view illustrating examples of modes, and sampling triggers, boundary values and other-person determination lines in the respective modes;

Fig. 21 is an example view showing a relationship between a discriminant threshold and an error rate in a browser 1 mode;

Fig. 22 is an example view showing a relationship between a discriminant threshold and an error rate in a browser 2 mode;

Fig. 23 is an example view showing a relationship between a discriminant threshold and an error rate in an email mode;

Fig. 24 is an example view showing a relationship between a discriminant threshold and an error rate in a personal information browsing mode;

Fig. 25 is an example view showing a relationship between a discriminant threshold and an error rate in a calling mode; and

Fig. 26 is an example view showing a relationship between a discriminant threshold and an error rate in an application mode.

[DETAILED DESCRIPTION OF THE EMBODIMENTS]

Now, embodiments of the present invention will be described in detail. Components having the same functions are assigned the same numbers, and a description thereof will given just once.

Example devices made by embodying a mobile information terminal of the present invention include mobile information terminals, PDAs, portable game machines, electronic pocketbooks, and electronic book readers. In addition to these listed devices, any devices that satisfy the following can be a mobile information terminal of the present invention. (1) Being used while being gripped, and being able to acquire gripping-features; and (2) having the risk of leaking personal information and valuable information by way of loss or theft. In the following descriptions of embodiments, a portable terminal will be taken as a specific example and explained in detail.

First, gripping-feature samples to be acquired by portable terminals 200, 200', 200", and 200''' according to all embodiments of the present invention will be described. Since human beings are innately different in (1) the lengths of their fingers and (2) the strength of their gripping force and, as an acquired nature, (3) in the habit of gripping a portable terminal, gripping-features are extremely suitable as biometric information used for authentication. More specifically, gripping-feature authentication has almost the same level of precision as general face authentication in terms of the false rejection rate and the false acceptance rate. Gripping-feature samples can include, for example, gripping-pressure distributions, gripping-shape distributions and gripping-heat distributions.

As an example method of acquiring these gripping-feature samples, when pressure sensors are distributed in an array on the portable terminals 200, 200', 200", and 200"', the gripping-pressure distributions can be acquired. In the same manner, when CCD (CMOS) sensors are planarly distributed in an array, gripping-shape distributions can be obtained. In the same manner, when infrared sensors are planarly distributed in an array, gripping-heat distributions can be obtained. When a portable terminal has operating keys at the rear surface thereof (touch sensitive panel), gripping-features can be acquired even from the pressing states (whether the operating keys or the touch sensitive panel is pressed) of the operating keys (touch sensitive panel) when the terminal is gripped.

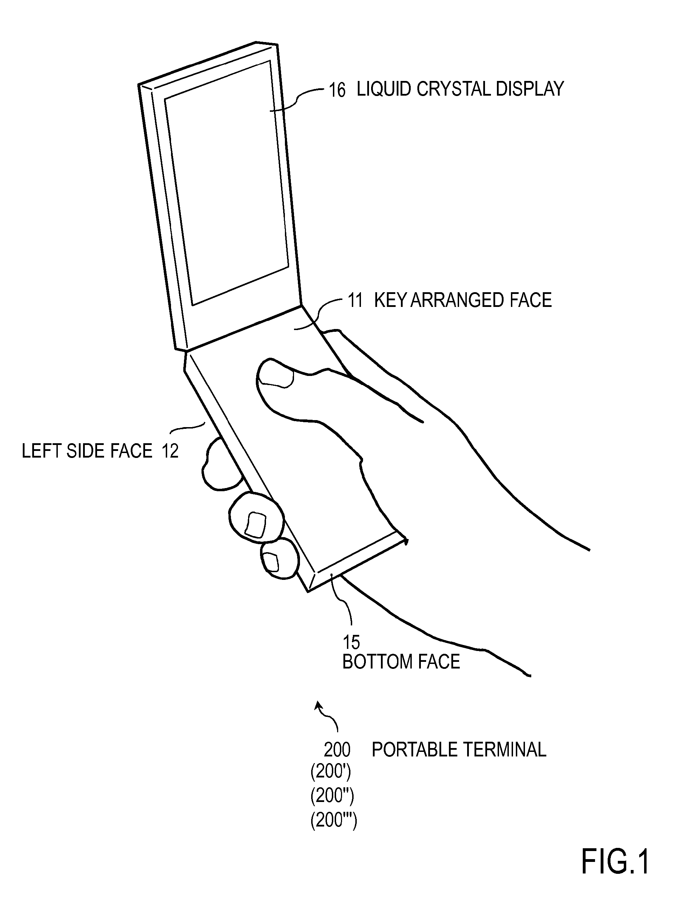

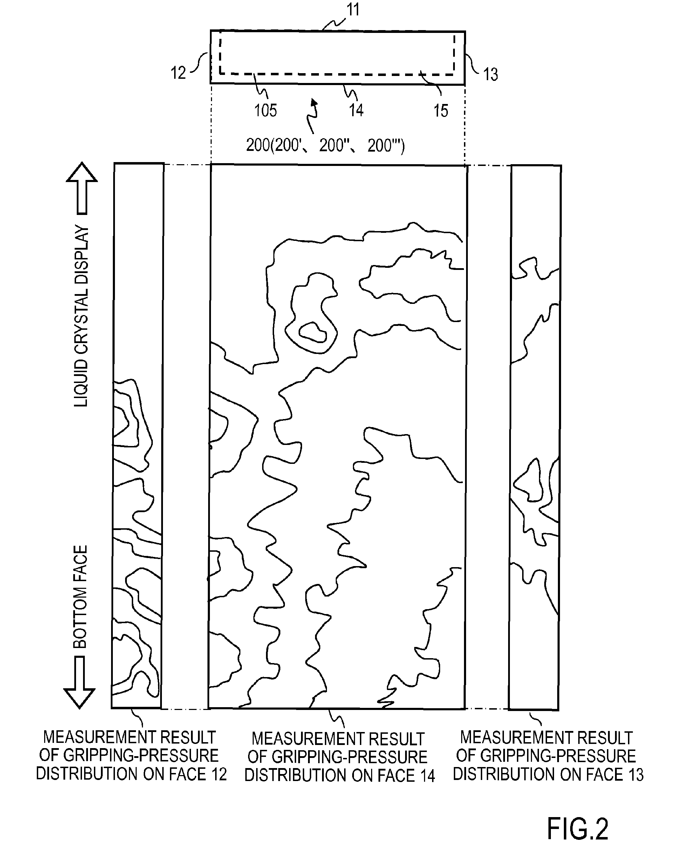

In the following descriptions of the embodiments, a gripping-pressure  distribution will be used as a gripping-feature sample. Acquisition of a gripping-feature distribution by using a pressure sensor array will be described in detail with reference to Fig. 1 and Fig. 2. Fig. 1 is an example view showing a state in which the portable terminals 200, 200', 200", and 200"' according to all the embodiments are gripped. Fig. 2 is an example view showing gripping-pressure distributions output from a pressure sensor array built in the portable terminals 200, 200', 200", and 200"' according to all the embodiments. It is assumed here that the portable terminals 200, 200', 200", and 200"' are general folding-type portable terminals. Two long-plate-shaped bodies are foldably coupled with a coupling shaft at short sides of the bodies. One of the bodies has operating keys. The surface on which the operating keys are arranged is called a key arranged face 11, the side faces of the key arranged face 11 in the longitudinal direction at the left and right are called a left side face 12 and a right side face 13, the rear surface of the key arranged face 11 is called a rear face 14, and a side face of the key arranged face 11 in the width direction at the bottom (face opposite the face where the coupling shaft is placed) is called a bottom face 15. A liquid crystal display 16 is provided in the other body on a surface facing the key arranged face 11 when the terminal is folded.

The portable terminals 200, 200', 200", and 200"' are configured as described above, but the foregoing description explains merely an example for describing in detail the gripping-pressure distributions output from the pressure sensor array, to be described later. Therefore, the portable terminals 200, 200', 200", and 200"' are not necessarily folding-type terminals, such as that shown in Fig. 1, and can have any types, such as a straight type or a  sliding type. Referring back to Fig. 1, it is assumed that the user of the portable terminals 200, 200', 200", and 200"' grips the portable terminals 200, 200', 200", and 200"' as shown in Fig. 1.

A pressure sensor array 105 (indicated by a dotted line in Fig. 2) is built so as to be able to detect external gripping-pressure, in the body where the key arranged face 11 of the portable terminals 200, 200', 200", and 200"' is disposed. The pressure sensor array 105 can detect the gripping-pressure distributions on the left side face 12, the right side face 13, and the rear face 14 of the portable terminals 200, 200', 200", and 200"'. The signal sent from each pressure sensor of the pressure sensor array 105 can be analyzed to draw gripping-pressure distributions such as those shown in Fig. 2. It is understood from the gripping-pressure distributions shown in Fig. 2 that characteristics of the fingers and the gripping force of the user are exhibited clearly on the left side face 12, the right side face 13, and the rear face 14. The gripping-pressure distributions acquired in this way can be used as gripping-feature samples in the present invention.

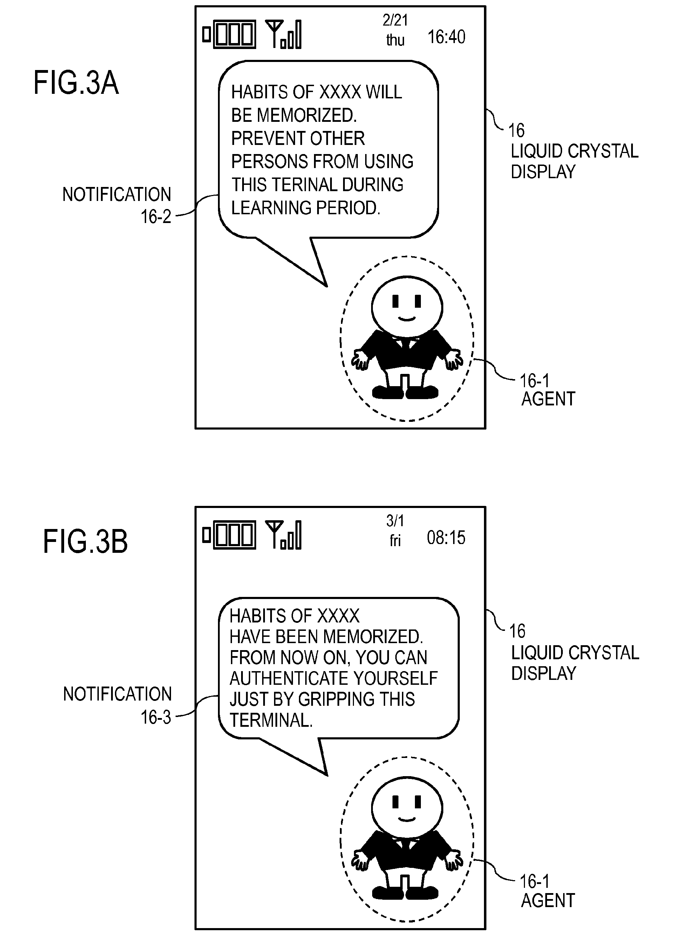

Next, notifications to be given to the user are described with reference to Figs. 3A and 3B, the notifications being given when the portable terminals 200, 200', 200", and 200"' start and finish learning of user authentication templates necessary for user authentication, through acquiring gripping-feature samples, in the embodiments of the present invention. Figs. 3A and 3B are example views showing notifications given to the user when the portable terminals 200, 200', 200", and 200"' according to all the embodiments start and finish learning of user authentication templates. For example, the portable terminals 200, 200', 200", and 200"' learn user  authentication templates, to be described later, when the terminals are used for the first time. When learning of user authentication templates is started, a screen such as that shown in Fig. 3A is displayed on the liquid crystal display 16. The following notification 16-2 is shown on the liquid crystal display 16 under the assumption that an agent 16-1 residing in the portable terminal talks to the user. "Habits of xxxx (user name) will be memorized. Prevent other people from using this terminal during the learning period." Since the user is not given any notification that specifies a special way of use, as described above, the user continues to use the portable terminals 200, 200', 200", and 200"' in a usual manner without paying special attention.

Gripping-feature samples are automatically acquired during the learning period. Gripping-feature samples may be acquired at predetermined intervals of time or may be acquired when the user presses a predetermined operating key. Alternatively, gripping-feature samples may be acquired upon a trigger (hereafter called a sampling trigger), such as when the user performs a predetermined key operation in a certain mode (such as during email operation or during a call) in the learning period, which will be described in detail in the third and subsequent embodiments. The user is not provided with any information indicating that a gripping-feature sample will be taken (was taken) at the moment when a gripping-feature sample is taken, or before or after that. Therefore, from the user viewpoint, gripping-feature samples are automatically acquired and accumulated at the acquisition timing, such as when the user performs an unconscious key operation or when a predetermined period of time elapses unconsciously.

Since gripping-feature samples are acquired in this way in the present invention, the samples reflect the state in which the user uses the terminal unconsciously and most spontaneously, in a relaxed manner. By doing so, the variance of observed values in gripping-feature samples can be made small. If acquisition of gripping-feature samples is declared in advance, the user would be on guard when receiving the declaration, and may grip the terminal not in a usual way but in a way that the user thinks is correct. The user may forget the usual way of gripping the terminal when receiving a declaration in advance. These would make the acquisition of precise gripping-feature samples difficult. This problem can be solved and the acquisition of precise gripping-feature samples is made possible if gripping-feature samples can be acquired while the user is unconscious of the acquisition, as described above. In the learning period, gripping-feature samples are accumulated as described above. When a sufficient number of gripping-feature samples has been accumulated, a notification such as a notification 16-3 shown in Fig. 3B is displayed, and the learning period ends.

Next, a disturbance sensor that is used in all of the embodiments of the present invention will be described. As described above, shaking of the portable terminal, the posture (tilting) of the portable terminal, existence or non-existence of an object that is connected to the portable terminal, the temperature of the portable terminal casing and the like may be mentioned as examples of disturbance factors. Therefore, the use of an acceleration sensor that can detect shaking or a change in the posture of the portable terminal, a connection sensor that detects when a cable or the like is connected to the portable terminal, or a casing temperature sensor or the like as a disturbance sensor can be considered. In the description of the embodiments, it is assumed that an acceleration sensor is used. The acceleration sensor that is used in the embodiments of the present invention will be described hereunder. A three-axis acceleration sensor that is often used in mobile cellular phones can be used as the acceleration sensor. A piezoresistance type three-axis acceleration sensor, an electrostatic capacitance type three-axis acceleration sensor, a heat detecting type three-axis acceleration sensor and the like are available as the three-axis acceleration sensor. In a piezoresistance type three-axis acceleration sensor, a diaphragm is formed by thinly forming the surface of a silicon semiconductor in a toric shape. Detection of a displacement caused by acceleration is facilitated by supporting a central weight with this thin metal. A change in the position of the diaphragm is detected by a piezoresistive element, and is amplified and measured by an electric circuit. Detection of acceleration in three axial directions is enabled by devising a suitable method of installing the diaphragm and piezoresistive elements. An electrostatic capacitance type three-axis acceleration sensor detects a slight positional change at a minute movable part that is supported by a beam structure as a change in the electrostatic capacitance, and amplifies and measures the change using an electric circuit. The detection accuracy is improved by forming two kinds of areas, namely, a coarse-toothed area and a fine-toothed area, in the comb-teeth structure of a comb that detects electrostatic capacitance.

[First Embodiment]

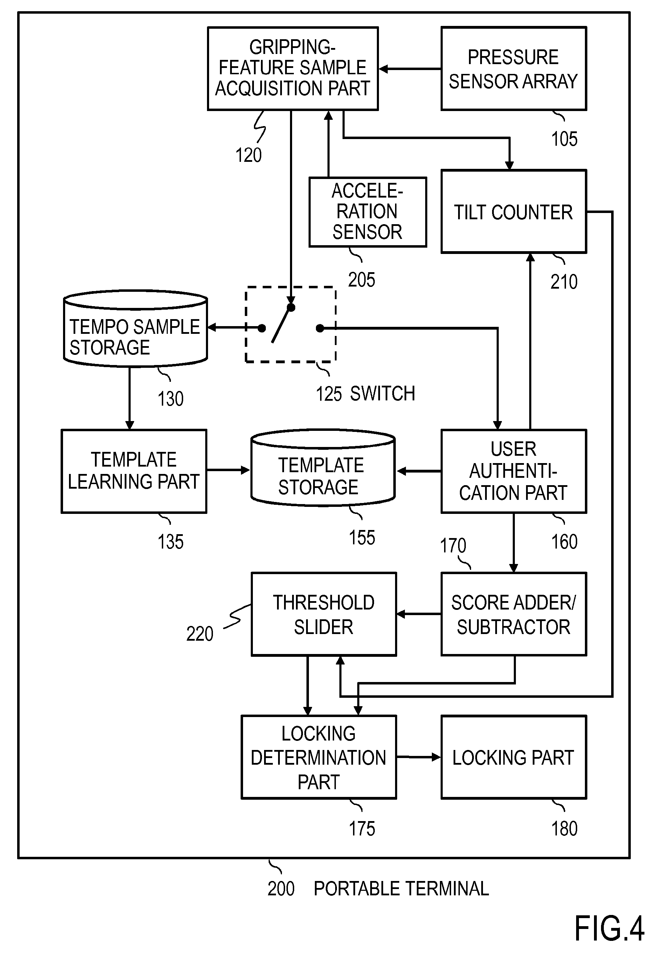

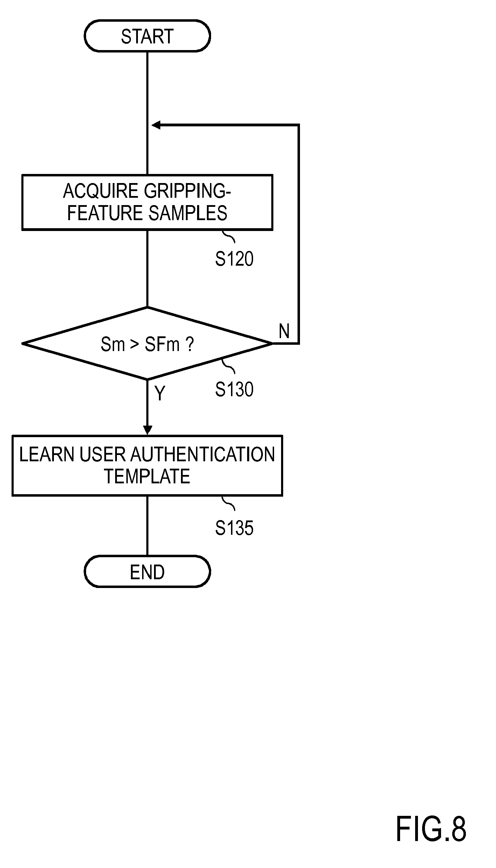

With the above described conditions being used as a premise, a portable terminal 200 for implementing user authentication by acquiring gripping-feature samples according to a first embodiment will be described in detail. The operation of the portable terminal 200 according to the first embodiment in a learning state will be described first with reference to Fig. 4 and Fig. 8. Fig. 4 is a block diagram showing the structure of the portable terminal 200 according to the present embodiment. Fig. 8 is a flowchart showing the operation of the portable terminal 200 according to the present embodiment in the learning state. The portable terminal 200 of the present embodiment includes a pressure sensor array 105, a gripping-feature sample acquisition part 120, an acceleration sensor 205, a switch 125, a temporary sample storage 130, a template learning part 135, a template storage 155, a tilt counter 210, a user authentication part 160, a score adder/subtractor 170, a threshold slider 220, a locking determination part 175 and a locking part 180.

The switch 125 switches the state of the portable terminal 200 between the learning state (the temporary sample storage 130 side) and the authentication state (the user authentication part 160 side). It is assumed here that the switch 125 is set to the learning state. The pressure sensor array 105 is built in the portable terminal 200, as described earlier. The gripping-feature sample acquisition part 120 acquires gripping-feature samples from the pressure sensor array 105 (S120). It is assumed here that the number of gripping-feature samples already acquired is Sm, and the number of learning-start samples is SFm. The number of learning-start samples, SFm, means a predetermined number of samples required for learning a user authentication template. It is already found that, even if a user authentication template is learned with a small number of acquired gripping-feature samples, the user authentication template cannot be generated with sufficient precision. Therefore, the number of samples empirically found to be required to obtain a highly precise user authentication template is set as the number of learning-start samples, SFm. Consequently, when the number of gripping-feature samples, Sm, stored in the temporary sample storage 130 reaches the number of learning-start samples, SFm, (Sm > SFm), the processing proceeds to step S 135, and the template learning part 135 learns a user authentication template with the gripping-feature samples and stores the learned user authentication template in the template storage 155 (Yes in S130, and S135). If the number of gripping-feature samples, Sm, stored in the temporary sample storage 130 does not reach the number of learning-start samples, SFm, (Sm < SFm), the processing returns to the start, and subsequently the operation to acquire gripping-feature samples is repeated (No in S 130). The user authentication template is generated from the average for the respective element positions of the gripping-feature samples (gripping-pressure distributions in all the embodiments) and other factors.

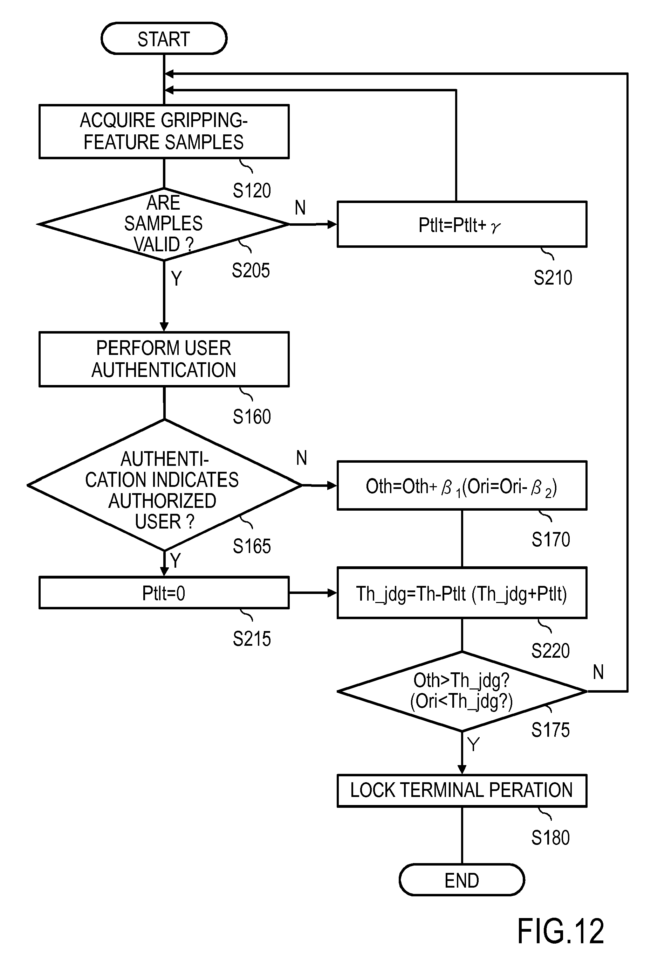

Next, with continuing reference to Fig. 4 and to Fig. 12 newly, the operation of the portable terminal 200 in the authentication state according to the first embodiment will be described. Fig. 12 is a flowchart showing the operation of the portable terminal 200 in the authentication state according to the present embodiment. It is assumed here that the switch 125 of the portable terminal 200 sets the state to the authentication state (the user authentication part 160 side). It is also assumed that, when operation in the authentication state starts, the learning state described above has been already completed, and the user authentication template has already been stored in the template storage 155. First, the gripping-feature sample acquisition part 120 acquires gripping-feature samples from the pressure sensor array 105 (S120). The gripping-feature sample acquisition part 120 acquires an acceleration that the acceleration sensor 205 measured at the time the gripping-feature samples were acquired (S205). At this time, if the acceleration acquired from the acceleration sensor 205 is less than or equal to a predetermined value, the gripping-feature samples acquired at the same time are regarded as valid (Yes in S205), while if the acceleration acquired from the acceleration sensor 205 exceeds the predetermined value, the gripping-feature samples acquired at the same time are regarded as invalid samples because a large quantity of errors are included therein (No in S205). If the acceleration value exceeds the predetermined value and consequently the gripping-feature samples acquired at the same time are determined to be invalid samples (No in S205), the tilt counter 210 adds a score to a tilt score (S210), and the processing returns to step S120. In this case, when the tilt score is denoted by "Ptlt" (it is assumed that the initial value thereof is 0) and a score to be newly added thereto is denoted by a positive predetermined value "$\gamma$", step S210 is represented by the following equation.

$$Ptlt = Ptlt + \gamma \ ...(1)$$

On the other hand, when the acceleration value that the acceleration sensor 205 measured is less than or equal to the predetermined value, and the gripping-feature samples acquired at the same time are therefore valid samples (Yes in S205), the user authentication part 160 compares the user authentication template that was learned in the aforementioned learning state with the gripping-feature samples to perform user authentication (S 160). If the result of the authentication performed by the user authentication part 160 indicates the authorized user (Yes in S 165), the tilt counter 210 resets the tilt score to 0 (S215, Ptlt = 0). The score adder/subtractor 170 adds/subtracts a score to/from the tilt score (S 170) each time a result of user authentication performed by the user authentication part 160 indicates an unauthorized user (No in S165). In this case, two conceivable variations with respect to the score that the score adder/subtractor 170 handles will be described. It is assumed that one variation is called "other-person score (Oth)" in the present invention. A fixed value is added to the other-person score (S 170) each time a result of user authentication performed by the user authentication part 160 indicates an unauthorized user (No in S 165), and a fixed value is not added to the other-person score when a result of user authentication performed by the user authentication part 160 indicates the authorized user (Yes in S165). When the other-person score is denoted by "Oth" (it is assumed that the initial value thereof is 0) and an other-person score to be added thereto is taken as a positive predetermined value $\beta_1$, step S 170 is represented by the following equation.

$$Oth = Oth + \beta_1 \ ...(2)$$

It is assumed that the other variation is called "authorized-user score (Ori)" in the present invention. A fixed value is subtracted from the authorized-user score (S 170) each time a result of user authentication performed by the user authentication part 160 indicates an unauthorized user (No in S 165), and a fixed value is not subtracted from the authorized-user score when the result of user authentication performed by the user authentication part 160 indicates the authorized user (Yes in S165). When the authorized-user score is denoted by "Ori", and an other-person score to be subtracted therefrom is taken as a positive predetermined value $\beta_2$, step S 170 is represented by the following equation.

$$Ori = Ori - \beta_2 \ ...(3)$$

The initial value of Ori is a predetermined value that is greater than $\beta_2$. Thus, two variations are available with respect to the score that is handled by the score adder/subtractor 170, and user authentication results that indicate an unauthorized user can be accumulated as a score by utilizing either of these variations.

Next, the threshold slider 220 determines a revised threshold by adding/subtracting the tilt score from a predetermined threshold each time the score adder/subtractor 170 adds or subtracts a score to or from the tilt score (S220). If the aforementioned score is the other-person score, when the predetermined threshold is denoted by "Th$_1$" and the revised threshold is denoted by "Th_jdg", the threshold slides to the revised threshold as shown by the following equation.

$$\text{Th\_jdg} = \text{Th}_1\text{-Ptlt} \ ...(4)$$

In contrast, if the aforementioned score is the authorized-user score, a predetermined threshold Th$_2$ slides to the revised threshold Th_jdg as shown by the following equation.

$$\text{Th\_jdg} = \text{Th}_2\text{+Ptlt} \ ...(5)$$

In this case, if both the threshold and the revised threshold are called an "other-person determination line", it means that the threshold slider 220 slides the other-person determination line upward or downward by the amount of the tilt score Ptlt. In the other-person score (Oth) variation in which the score increases each time a result of user authentication indicates an unauthorized user, the other-person determination line descends. In the authorized-user score (Ori) variation in which the score decreases each time a result of user authentication indicates an unauthorized user, the other-person determination line ascends. This situation is described in detail later. Next, when the aforementioned score is the other-person score, if the other-person score (Oth) has changed across the revised threshold (Th_jdg) (Oth > Th_jdg), it is determined that the user authentication failed (Yes in S 175). Further, when the aforementioned score is the authorized-user score, if the authorized-user score (Ori) has changed across the revised threshold (Th_jdg) (Ori < Th_jdg), the locking determination part 175 determines that the user authentication failed (Yes in S 175). On the other hand, if the other-person (or authorized-person) score (Oth, Ori) has not changed across the revised threshold (Th_jdg), it is determined that the user authentication succeeded and the processing returns to step S120 (No in S 175).

If the locking determination part 175 determines that the user authentication has failed (Yes in S 175), the locking part 180 locks some or all of the functions of the portable terminal 200 and the processing ends (S 180). If the user authentication succeeds (No in S 175), the processing returns to step S 120. The user authentication template and the gripping-feature samples can be compared in the following way, for example. The user authentication part 160 calculates the distance (for example, Mahalanobis's generalized distance) between the user authentication template and the gripping-feature samples acquired in the authentication state. The user authentication part 160 determines that the acquired gripping-feature samples were acquired from the authorized user when the distance is equal to or shorter than a predetermined value. The user authentication part 160 determines that the acquired gripping-feature samples were not acquired from the authorized user when the distance is longer than the predetermined value.

Examples of the distance serving as a determination criterion, described earlier, will be explained below. It is assumed here, for example, that a pressure value $x_{i,j}$ was acquired from the i-th sensor element of the pressure sensor array in the j-th measurement performed for learning, where i = 1, 2, ..., n; j = 1, 2, ..., m; n indicates the maximum number of sensor elements and is an integer equal to 2 or greater, and m indicates the maximum number of gripping-feature measurements for learning and is an integer equal to 2 or greater. The average of the pressure values, the variance, and the vectors of the average and the variance are defined as follows:

$$\overline{x}_i = \frac{1}{m}(\sum_{j=1}^{m} x_{i,j})$$

$$s_i^2 = \frac{1}{m} \sum_{j=1}^{m} (\overline{x}_i - x_{i,j})^2$$

$$\mathbf{X} = (\overline{x}_1, \overline{x}_2, \cdots, \overline{x}_n); \quad S^2 = (s_1^2, s_2^2, \cdots, s_n^2)$$

The user authentication template is indicated with a subscript "le". The Mahalanobis's generalized distance $f_1$ is given by the following expression.
$$f_1 = \left[ \sum_{i=1}^{n} \left( \frac{x_i - {}_{le}\overline{x}_i}{s_i} \right)^2 \right]^{1/2}$$

As another example distance, the Euclid distance $f_2$ can be defined by the following expression.
$$f_2 = \left[ \sum_{i=1}^{n} (x_i - {}_{le}\overline{x}_i)^2 \right]^{1/2}$$

As still another example distance, the Manhattan distance $f_3$ can be defined by the following expression.
$$f_3 = \sum_{i=1}^{n} | x_i - {}_{le}\overline{x}_i |$$

These three distances can be used to perform user authentication with the following determination expression in common. Data of the authorized user, acquired for determination, is indicated with a subscript "self", and data of other people is indicated with a subscript "oth". When the threshold used to determine other people is defined as $x_{thre}$, the following expression can be used to determine other people.

$$x_{thre} < {}_{oth}f$$

It is assumed here that gripping-feature sample data of other people is available in some method, such as embedding the data in the portable terminal in advance, allowing the user to access the data on the Internet, or allowing the user to acquire the data by asking other people to grip the portable terminal. From the data of other people and the user authentication template, the distance ${}_{oth}f$ is calculated. The threshold $x_{thre}$ is determined to satisfy the following condition after the distance ${}_{self}f$ is calculated from gripping-feature samples of the authorized user that were not used for template learning, and  the learned template.

$$_{\text{self}}f < x_{\text{thre}} < {}_{\text{oth}}f$$

The user authentication template is obtained from the average of gripping-feature samples in the foregoing description. However, other methods can be used. For example, a pressure distribution acquired from n sensor elements is divided into appropriate areas (10 areas, for example, where n is larger than 10); the sum (or the average) of gripping-pressures in each of the areas is calculated to generate vector data consisting of the sums (or the averages) of gripping-pressures in the respective areas; and such vector data is generated for m gripping-feature samples, and the average thereof is used as the template. Alternatively, the positions of the sensor elements having the top 20 pressure values among n sensor elements are recorded; vector data thereof is generated; and such vector data is generated for m gripping-feature samples, and the average thereof is used as the template.

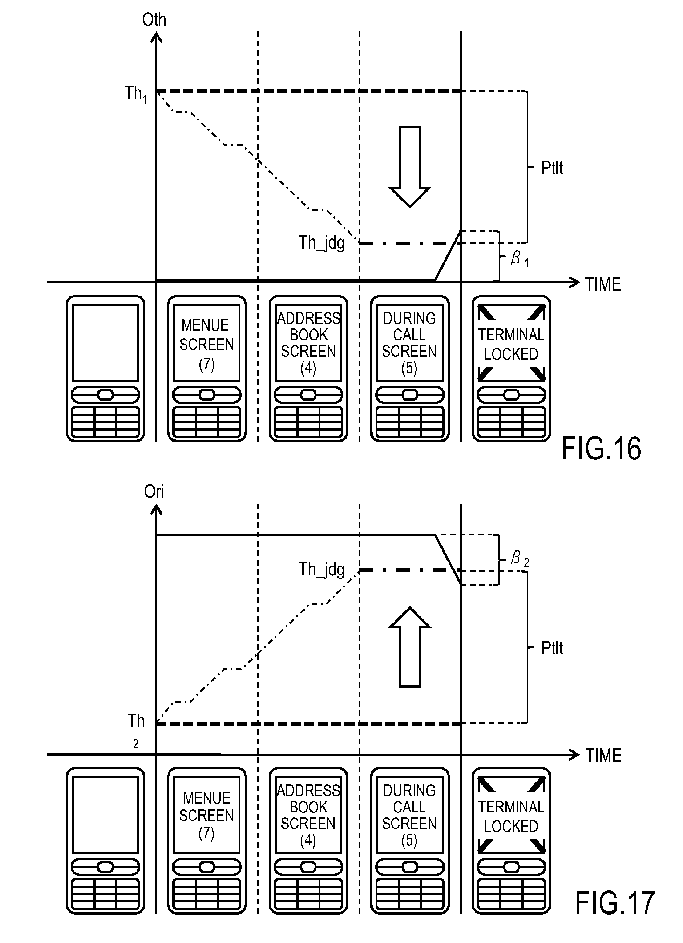

Next, the other-person score, the tilt score and sliding of the other-person determination line that are described above are described in detail with reference to Fig. 16. Fig. 16 is a view illustrating the operation of the tilt counter 210, the score adder/subtractor 170 and the threshold slider 220 of the portable terminal 200 according to the first embodiment. A graph in Fig. 16 shows how the other-person score (Oth) accumulates over time, where the horizontal axis indicates time, and the vertical axis indicates the other-person score (Oth). This graph is generated assuming that a third party, who is not the authorized user of the portable terminal 200, operates the portable terminal 200, opens its menu screen, browses the address book, and makes a phone call. It is assumed that the third party who operates the portable terminal 200 of the present embodiment knows that the portable terminal 200 acquires gripping-feature samples to perform user authentication, and also knows that the gripping-feature samples are determined to be invalid in a state in which the portable terminal 200 is being shaken or tilted to a large degree and that user authentication can not be performed when the gripping-feature samples are invalid. It is also assumed that the third party is attempting to use this knowledge for malicious purposes.

More specifically, it is assumed that the third party intends to maliciously obtain personal information or valuable information stored in the portable terminal 200 of the present embodiment while avoiding user authentication by operating the portable terminal 200 while strongly shaking and tilting it. It is assumed that, first, the third party opened the menu screen while tilting the portable terminal 200 to a large degree and occasionally shaking it in a strong manner. As described above, the acceleration sensor 205 is built into the portable terminal 200. The acceleration sensor 205 detects the shaking and tilting of the portable terminal 200, and if the measured acceleration exceeds a predetermined fixed value (No in S205), the tilt counter 210 adds a score to the tilt score Ptlt (S210).

The threshold slider 220 lowers ($\text{Th}_1 \rightarrow \text{Th\_jdg}$) the other-person determination line by the amount of the tilt score Ptlt (S220). Accordingly, each time the third party tilts or shakes the portable terminal, the other-person determination line descends. This state is represented by an alternate long and short dashed line in Fig. 16. The malicious third party performed operations on the menu screen several times while tilting and shaking the portable terminal 200. Therefore, Ptlt accumulates as shown by the alternate long and short dashed line in the drawing while the malicious third party performs the menu screen operations. Next, the malicious third party opens the address book screen and performs screen operations while tilting and shaking the portable terminal 200 in the same manner as described above. As a result, Ptlt accumulates as shown by the alternate long and short dashed line in the drawing. When the malicious third party switches to making a call, because Ptlt has accumulated, the other-person determination line has dropped as far as the position of Th_jdg that is considerably lower than the position of $\text{Th}_1$ (S220).

Subsequently, the third party makes a call. In this situation, the third party uses the portable terminal 200 in the normal manner without shaking or tilting it. It is assumed that under these circumstances, a predetermined trigger (for example, a trigger generated once every five minutes) is generated, and a gripping-feature sample is acquired together with generation of the trigger (S120, Yes in S205). In addition, it is assumed that the user authentication part 160 compares the gripping-feature sample with a previously learned user authentication template, and determines as a result that the gripping-feature is not that of the authorized user (No in S165). Thereupon, as described above, the score adder/subtractor 170 adds a score to the other-person score Oth ($\text{Oth} = \text{Oth} + \beta_1$) (S 170), and it is assumed that as a result the other-person score (Oth) changes across the revised threshold (Th_jdg) (Oth > Th_jdg) (Yes in S175). In this case, as described above, it is determined that the user authentication failed (Yes in S175), and the locking part 180 locks some or all of the functions of the portable terminal 200 (S 180).

Next, the authorized-user score, the tilt score and sliding of the other-person determination line that are described above are described in detail with reference to Fig. 17. Fig. 17 is a view illustrating the operation of the tilt counter 210, the score adder/subtractor 170 and the threshold slider 220 of the portable terminal 200 according to the first embodiment. A graph in Fig. 17 shows how the authorized-user score (Ori) accumulates over time, where the horizontal axis indicates time, and the vertical axis indicates the authorized-user score (Ori). The conditions based on which this graph is generated are the same as the conditions described with respect to Fig. 16. Similarly to the foregoing description, it is assumed that the third party who operates the portable terminal 200 of the present embodiment knows that user authentication can not be performed when gripping-feature samples are invalid, and is attempting to use this knowledge for malicious purposes.

It is assumed that, first, the third party opened the menu screen while tilting the portable terminal 200 to a large degree and occasionally shaking the portable terminal 200 strongly. The acceleration sensor 205 detects the shaking and tilting of the portable terminal 200, and if the measured acceleration exceeds a predetermined fixed value (No in S205), the tilt counter 210 adds a score to the tilt score Ptlt (S210).The threshold slider 220 raises (Th$_2$ → Thjdg) the other-person determination line by the amount of the tilt score Ptlt (S220). Accordingly, each time the third party tilts or shakes the portable terminal, the other-person determination line rises. This state is represented by an alternate long and short dashed line in Fig. 17.

The malicious third party performed operations on the menu screen several times while tilting and shaking the portable terminal 200. Therefore, Ptlt accumulates as shown by the alternate long and short dashed line in the drawing while the malicious third party performs the menu screen operations. Next, the malicious third party opens the address book screen and performs screen operations while tilting and shaking the portable terminal 200 in the same manner as described above. As a result, Ptlt accumulates as shown by the alternate long and short dashed line in the drawing. When the malicious third party switches to making a call, because Ptlt has accumulated, the other-person determination line has risen as far as the position of Th_jdg that is considerably higher than the position of Th$_2$ (S220).

Subsequently, the third party makes a call. In this situation, the third party uses the portable terminal 200 in the normal manner without shaking or tilting it. It is assumed that under these circumstances, a predetermined trigger (for example, a trigger generated once every five minutes) is generated, and a gripping-feature sample is acquired together with generation of the trigger (S120, Yes in S205). In addition, it is assumed that the user authentication part 160 compares the gripping-feature sample with a previously learned user authentication template, and determines as a result that the gripping-feature is not that of the authorized user (No in S165). Thereupon, as described above, the score adder/subtractor 170 subtracts a score from the authorized-user score Ori (Ori = Ori-$\beta_2$) (S 170), and it is assumed that as a result the authorized-user score (Ori) changes across the revised threshold (Th_jdg) (Ori < Th_jdg) (Yes in S175). In this case, as described above, the user authentication part 160 determines that the user authentication failed (Yes in S 175), and the locking part 180 locks some or all of the functions of the portable terminal 200 (S180).

In this way, the tilt score accumulates through steps S120, S205 and S210 while the user authentication in step S160 can not be performed under the circumstances in which there is a large amount of shaking or tilting, and when the user authentication in step S160 is subsequently performed while the portable terminal 200 is used within a normal range of shaking and in a normal posture, unless the user is the authorized user, the other-person determination line is set to a strict level in step S220 because of the large tilt score that has accumulated. Consequently, the portable terminal 200 can be locked with respect to a third party that has knowledge regarding the gripping-feature authentication of the present portable terminal and attempts to maliciously use such knowledge, and thus the security of the portable terminal 200 can be ensured. At the same time, as described above, since the accumulated tilt score is reset to zero when authentication succeeds (S215), even if the authorized user is using the portable terminal 200 in an environment in which there is a large amount of shaking or tilting, the portable terminal 200 is not inappropriately locked and thus the convenience of the user can be ensured.

[Second Embodiment]

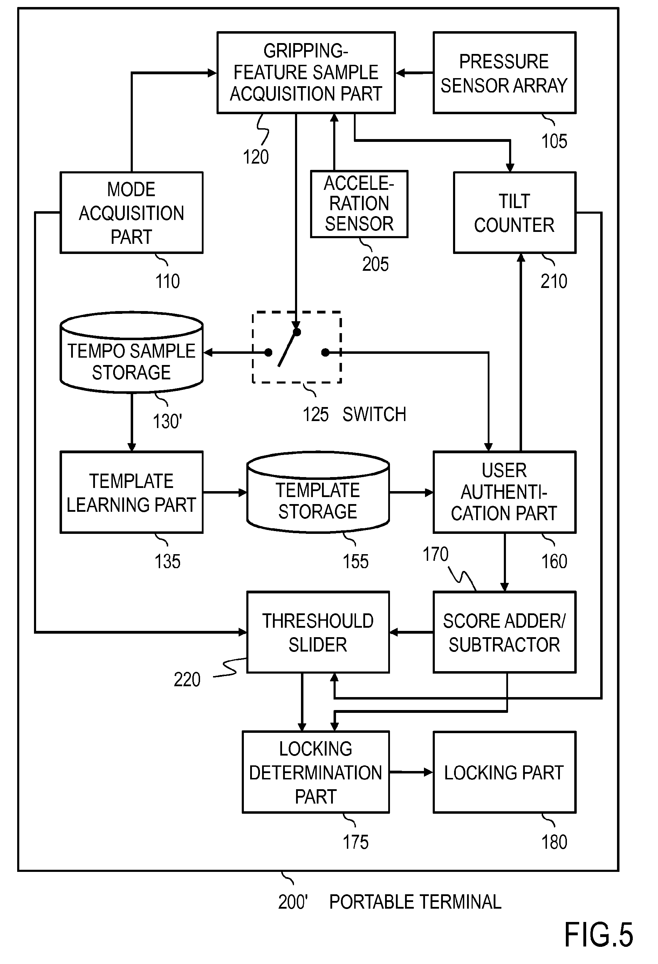

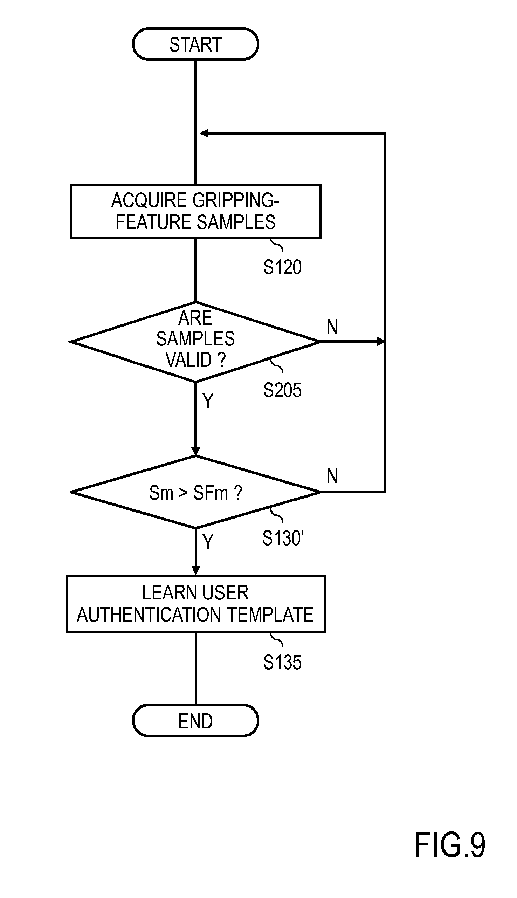

A portable terminal 200' according to a second embodiment, which is an example terminal in which the user authentication template function and the threshold slider function of the portable terminal 200 according to the first embodiment, described above, have been further improved, will be described in detail. The operation of the portable terminal 200' according to the second embodiment in a learning state will be described first with reference to Fig. 5 and Fig. 9. Fig. 5 is a block diagram showing the structure of the portable terminal 200'. Fig. 9 is a flowchart showing the operation of the portable terminal 200' according to the present embodiment in the learning state. As shown in Fig. 5, the portable terminal 200' of the present embodiment includes a pressure sensor array 105, a mode acquisition part 110, a gripping-feature sample acquisition part 120, an acceleration sensor 205, a switch 125, a temporary sample storage 130', a template learning part 135, a template storage 155, a tilt counter 210, a user authentication part 160, a score adder/subtractor 170, a threshold slider 220, a locking determination part 175 and a locking part 180.

The differences in the learning state between the second embodiment and the first embodiment are that although the temporary sample storage 130' of the portable terminal 200' of the second embodiment invalidates part of the gripping-feature samples, a determination of that kind is not made in the temporary sample storage 130 of the portable terminal 200 of the first embodiment, and also that although the portable terminal 200' of the present embodiment includes the mode acquisition part 110, the portable terminal 200 of the first embodiment does not include the mode acquisition part 110. Since the operation of each part other than the temporary sample storage 130' and the mode acquisition part 110 is exactly the same as that of the part having the same reference numeral in the first embodiment, a description thereof is omitted.

It is assumed here that the switch 125 is set to the learning state. The gripping-feature sample acquisition part 120 acquires gripping-feature samples from the pressure sensor array 105 (S120). This operation is the same as in the first embodiment. Next, the gripping-feature sample acquisition part 120 acquires an acceleration that the acceleration sensor 205 measured at the time the gripping-feature samples were acquired (S205). At this time, if the acceleration acquired from the acceleration sensor 205 is less than or equal to a predetermined value, the gripping-feature samples that were acquired at the same time are regarded as valid (Yes in S205), while if the acceleration acquired by the acceleration sensor 205 exceeds the predetermined value, the gripping-feature samples acquired at the same time are regarded as invalid samples because a large quantity of errors are included therein (No in S205). If the acquired gripping-feature samples are not valid (No in S205), the gripping-feature samples that are not valid are not stored in the temporary sample storage 130', and the processing returns to the start to repeat the operation to acquire gripping-feature samples (S120). In contrast, if the acquired gripping-feature samples are valid (Yes in S205), the gripping-feature samples are stored in the temporary sample storage 130' and the processing moves to step S130'. Since the operations thereafter are exactly the same as the operations described in the first embodiment, a description thereof is omitted.

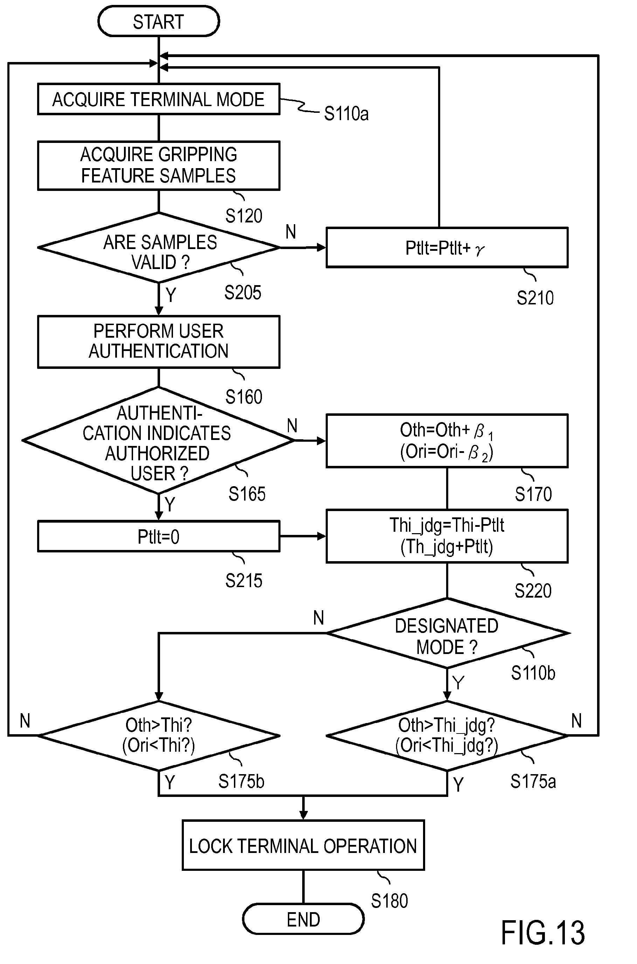

Next, with continuing reference to Fig. 5 and to Fig. 13 newly, the operation of the portable terminal 200' in the authentication state according to the second embodiment will be described. Fig. 13 is a flowchart showing the operation of the portable terminal 200' in the authentication state according to the present embodiment. First, the mode acquisition part 110 acquires the mode of the portable terminal 200' (S110a). Modes are classified according to the activation states and the like of applications built into the portable information terminal, and include, for example, an email mode, an application mode and a browser mode. The modes will be described in detail later. The total number of modes is n, and hereunder they are numbered in the manner 1st, ..., i-th, ... nth and the like and are referred to in that manner. In the description of the present embodiment, it is assumed that the mode acquired by the mode acquisition part 110 was the i-th mode.

Since steps S120, S205, S210, S160, S165, S 170 and S215 are the same as in the first embodiment except that the processing returns to step S110a after a score is added to the tilt score Ptlt in step S210, a description thereof is omitted and the description will be continued from step S220. The threshold slider 220 determines the revised threshold Thi_jdg of the i-th mode by adding/subtracting the tilt score Ptlt to/from a predetermined threshold Thi of the predetermined i-th mode (S220). Next, if the i-th mode that the mode acquisition part 110 acquired as described above is a predetermined mode (Yes in S110b), the locking determination part 175 determines that the user authentication failed if the score changed across the revised threshold Thi_jdg (Yes in S175a), and the processing moves to step S180 to lock operations of the terminal. If the score did not change across the revised threshold in step S175a, the processing returns to step S110a. On the other hand, if the i-th mode that the mode acquisition part 110 acquired is not a predetermined mode (No in S110b), the locking determination part 175 determines that the user authentication failed if the score changed across the threshold Thi of the i-th mode (Yes in S 175b), and the processing moves to step S 180 to lock operations of the terminal. If the score did not change across the threshold in step S175b, the processing returns to step S110a. Since the other operations are exactly the same as the operations described in the first embodiment, a description thereof is omitted.

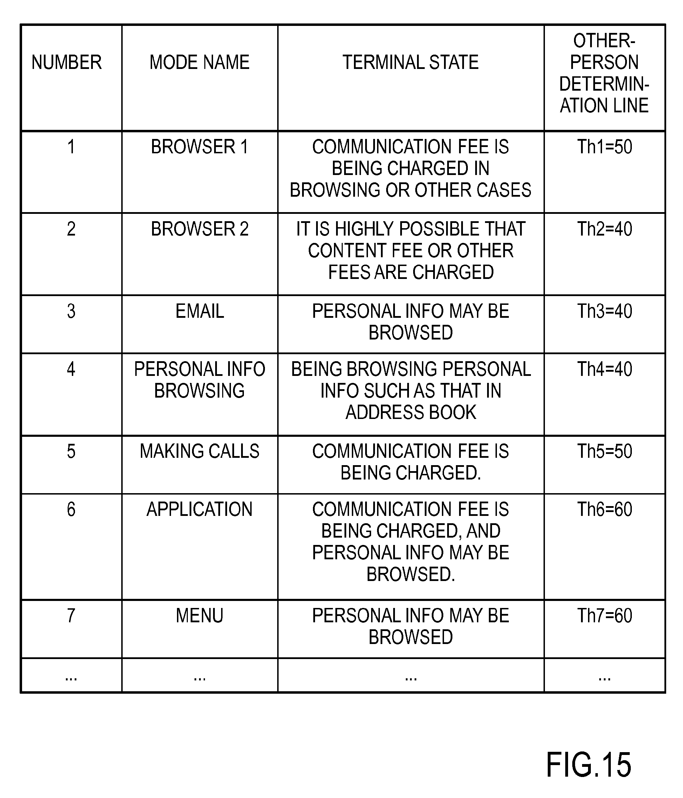

Next, modes used in the present embodiment are described in detail with reference to Fig. 15. Fig. 15 is an example view showing modes of the portable terminal 200' and the relationship between the state of the terminal in each mode and an other-person determination line. As illustrated in Fig. 15, modes include browser 1, browser 2, email, personal information browsing, calling, application, and menu. The browser 1 mode indicates an operating state of the portable terminal in which a communication fee is being incurred because web pages are being browsed or an operating state of the portable terminal in which a communication fee may be incurred. Therefore, the browser 1 mode corresponds, for example, to an operating state in which browser software installed in the portable terminal 200' is activated and the portal page of the portable terminal 200' is being browsed. The browser 2 mode indicates an operating state in which a content fee is being incurred because web pages are being browsed or an operating state of the portable terminal 200' in which a content fee may be incurred. Therefore, the browser 2 mode corresponds, for example, to an operating state in which browser software installed in the portable terminal 200' is activated and application software for the portable terminal 200' is being downloaded for a fee. The email mode indicates an operating state in which personal information written in an email may be read. Therefore, the email mode corresponds, for example, to an operating state in which a mailer installed in the portable terminal 200' is activated and an email folder of the portable terminal 200' is being browsed; an operating state in which a return email is being written with the mailer; or an operating state in which an email is being received. The personal information browsing mode indicates an operating state in which personal information such as that described in an address book is being browsed. Therefore, the personal information browsing mode corresponds, for example, to an operating state in which an address book stored in the portable terminal 200' is being browsed. The calling mode indicates an operating state of the portable terminal 200' in which a call fee is being charged. Therefore, the calling mode corresponds, for example, to an operating state in which a call is being made by using the portable terminal 200'. The application mode indicates an operating state of the portable terminal 200' in which a communication fee may be incurred or in which personal information may be browsed. Therefore, the application mode corresponds, for example, to an operating state in which application software installed in the portable terminal 200' is activated. The menu mode indicates an operating state of the portable terminal 200' in which personal information may be browsed depending on which screen is selected from the menu of the portable terminal 200'. Therefore, the menu mode corresponds, for example, to an operating state in which the menu screen of the portable terminal 200' is browsed and a target destination is being selected. The modes are specified according to the functions of the portable terminal, such as browsing and emailing, in the above description. The modes are not necessarily specified according to the functions, however, because the modes can be specified according to the orientation of the portable terminal by using information output from a sensor, such as an acceleration sensor, a gyroscope, or a camera.

In this case, it is assumed that the threshold (other-person determination line, Thi) differs depending on the mode. For example, if it is assumed that a malicious third party operates the portable terminal 200', the level of emergency for locking the terminal differs between when the third party operates the menu screen and when the third party browses personal information such as the address book. Therefore, for example, as shown in Fig. 15, when a threshold (other-person determination line, Th7) is set to 60 for the menu mode and a threshold (other-person determination line, Th4) is set to 40 for the personal information browsing mode, the necessity for locking the portable terminal 200' can be different.

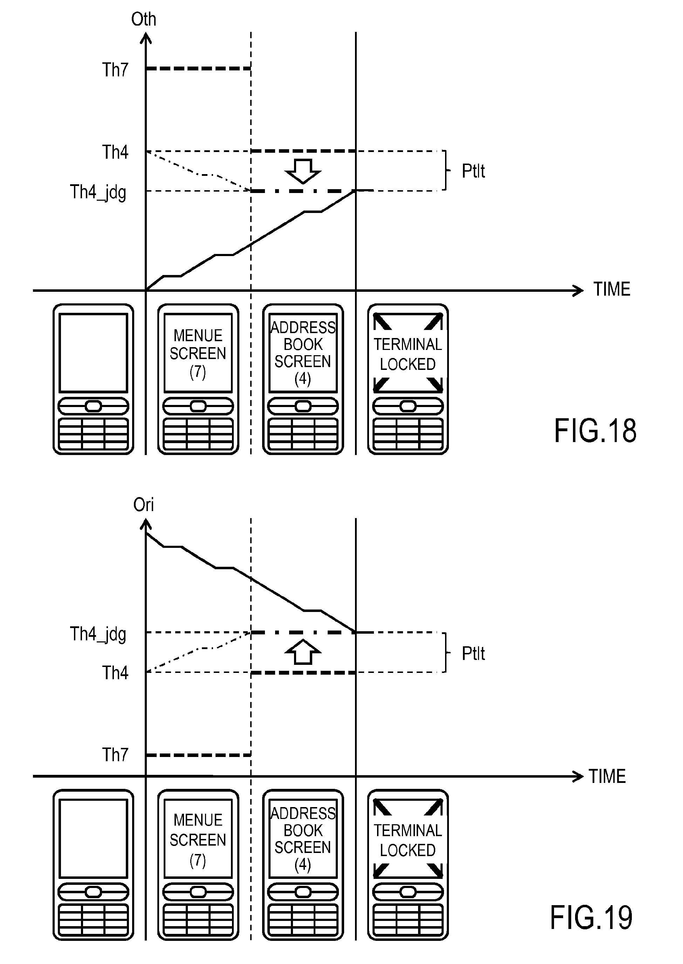

Next, the other-person score, the tilt score and sliding of the other-person determination line are described in detail with reference to Fig. 18. Fig. 18 is a view illustrating the operation of the tilt counter 210, the score adder/subtractor 170 and the threshold slider 220 of the portable terminal 200' according to the second embodiment. A graph in Fig. 18 shows how the other-person score (Oth) accumulates over time, where the horizontal axis indicates time, and the vertical axis indicates the other-person score (Oth). This graph is generated assuming that a third party, who is not the authorized user of the portable terminal 200', operates the portable terminal 200', opens the menu screen of the portable terminal 200 and browses the address book. It is assumed that the third party who operates the portable terminal 200' of the present embodiment knows that the portable terminal 200' acquires gripping-feature samples to perform user authentication, and also knows that the gripping-feature samples are determined to be invalid in a state in which the portable terminal 200 is being shaken or tilted to a large degree and that authentication can not be performed when the gripping-feature samples are invalid. It is also assumed that the third party is attempting to use this knowledge for malicious purposes.

More specifically, it is assumed that the idea of the third party is to maliciously obtain personal information or valuable information stored in the portable terminal 200' of the present embodiment while avoiding user authentication by operating the portable terminal 200' while strongly shaking and tilting it. It is assumed that, first, the third party opened the menu screen while tilting the portable terminal 200' to a large degree and occasionally shaking it strongly. As described above, the acceleration sensor 205 is built into the portable terminal 200'. The acceleration sensor 205 detects the shaking and tilting of the portable terminal 200', and if the measured acceleration exceeds a predetermined fixed value (No in S205), the tilt counter 210 adds a score to the tilt score Ptlt (S210).

The threshold slider 220 lowers (Th4 → Th4_jdg) the other-person determination line by the amount of the tilt score Ptlt only when the mode acquired by the mode acquisition part 110 is a predetermined mode (in this case, the personal information browsing mode; in the drawing, the address book screen) (S220). Accordingly, each time the third party tilts or shakes the portable terminal, the other-person determination line (Th4_jdg) descends. This state is represented by an alternate long and short dashed line in Fig. 18. On the other hand, it is assumed that the other-person determination line for the menu screen does not descend and remains at Th7. By varying whether to use the revised threshold (Thi_jdg) or to use the predetermined threshold (Thi) depending on the mode, the necessity for locking the portable terminal 200' can be different for each mode.

When performing operations on the aforementioned menu screen and address book screen, the third party may also use the portable terminal 200' normally without shaking or tilting it. That is, the tilt score Ptlt accumulates as the result of operation of the portable terminal 200' that is accompanied by shaking or tilting thereof, and authentication is performed when the third party uses the portable terminal 200' in a state in which there is no shaking or tilting (S165). When it is determined that the result of the user authentication indicates an unauthorized user (No in S165), a score is added to the other-person score is (Oth = Oth+$\beta_1$) (S170). The manner in which the other-person score is added to in this way is represented by a solid line graph that increases from the origin towards the upper right side in Fig. 18. It is assumed that, as a result, as shown in Fig. 18, the other-person score (Oth) exceeded the revised threshold (Th4_jdg) while operations were being performed on the address book screen (Oth > Th4_jdg) (Yes in S175). In this case, it is determined that the user authentication failed (Yes in S175), and the locking part 180 locks some or all of the functions of the portable terminal 200' (S180).

Next, the authorized-user score, the tilt score and sliding of the other-person determination line are described in detail with reference to Fig. 19. Fig. 19 is a view illustrating the operation of the tilt counter 210, the score adder/subtractor 170 and the threshold slider 220 of the portable terminal 200' according to the present embodiment. A graph in Fig. 19 shows how the authorized-user score (Ori) accumulates over time, where the horizontal axis indicates time, and the vertical axis indicates the authorized-user score (Ori). The conditions based on which this graph is generated are the same as the conditions described with respect to Fig. 18. Similarly to the foregoing description, it is assumed that the third party who operates the portable terminal 200' of the present embodiment knows that user authentication can not be performed when gripping-feature samples are invalid, and is attempting to use this knowledge for malicious purposes. It is assumed that, first, the third party opened the menu screen while tilting the portable terminal 200' to a large degree and occasionally shaking it strongly. The acceleration sensor 205 detects the shaking and tilting of the portable terminal 200', and if the measured acceleration exceeds a predetermined fixed value (No in S205), the tilt counter 210 adds a score to the tilt score Ptlt (S210).The threshold slider 220 raises (Th4 $\rightarrow$ Th4_jdg) the other-person determination line by the amount of the tilt score Ptlt only when the mode acquired by the mode acquisition part 110 is a predetermined mode (in this case, the personal information browsing mode; in the drawing, the address book screen) (S220). Accordingly, each time the third party tilts or shakes the portable terminal, the other-person determination line (Th4_jdg) rises. This state is represented by an alternate long and short dashed line in Fig. 19. On the other hand, it is assumed that the other-person determination line for the menu screen does not rise and remains at Th7.

When performing operations on the aforementioned menu screen and address book screen, the third party may also use the portable terminal 200' normally without shaking or tilting it. That is, the tilt score Ptlt accumulates as the result of operation of the portable terminal 200' that is accompanied by vibration or tilting thereof, and authentication is performed when the third party uses the portable terminal 200' in a state in which there is no shaking or tilting (S165). When it is determined that the result of the authentication indicates an unauthorized user (No in S165), a score is subtracted from the other-person score (Ori = Ori-$\beta_2$) (S170). The manner in which the authorized-user score is reduced in this way is represented by a solid line graph that decreases in the direction from the upper left to the lower right in Fig. 19. It is assumed that, as a result, as shown in Fig. 19, the authorized-user score (Ori) became less than the revised threshold (Th4_jdg) while operations were being performed on the address book screen (Ori < Th4_jdg) (Yes in S175). In this case, it is determined that the user authentication failed (Yes in S175), and the locking part 180 locks some or all of the functions of the portable terminal 200' (S180).

By varying whether to use the revised threshold (Thi_jdg) or to use the threshold (Thi) depending on the mode in the present embodiment, the necessity for locking the portable terminal 200' can be different for each mode. Thus the operations can be different depending on the mode, with the revised threshold being used for modes in which there is a high possibility of leaking personal information, and the threshold being used for other modes.

[Third Embodiment]

A portable terminal 200" according to a third embodiment, which is an example terminal in which the learning function and the authentication function of the portable terminal 200' according to the second embodiment, described above, have been further improved, will be described in detail.

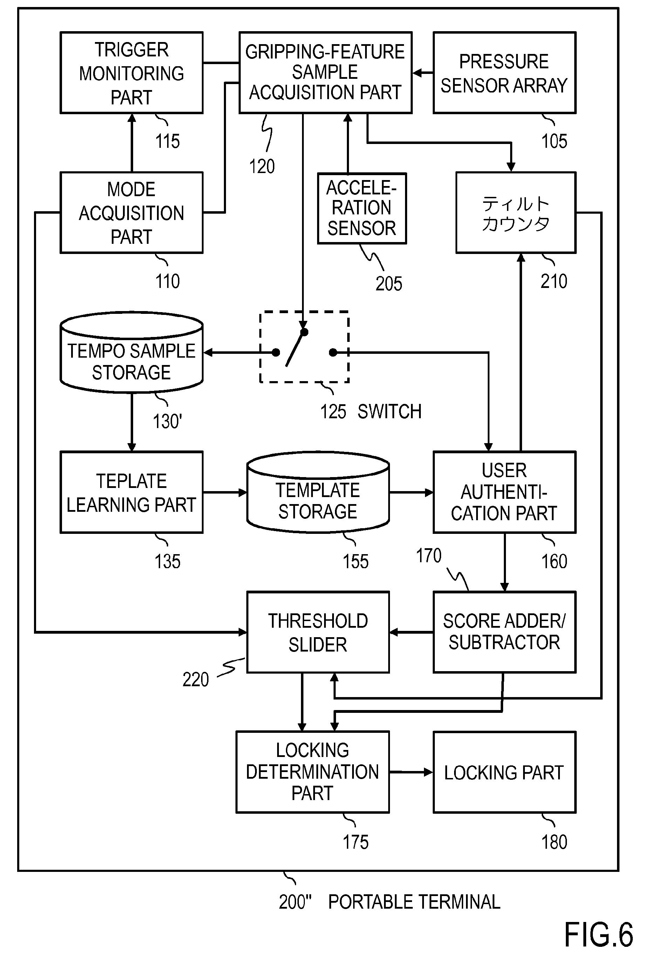

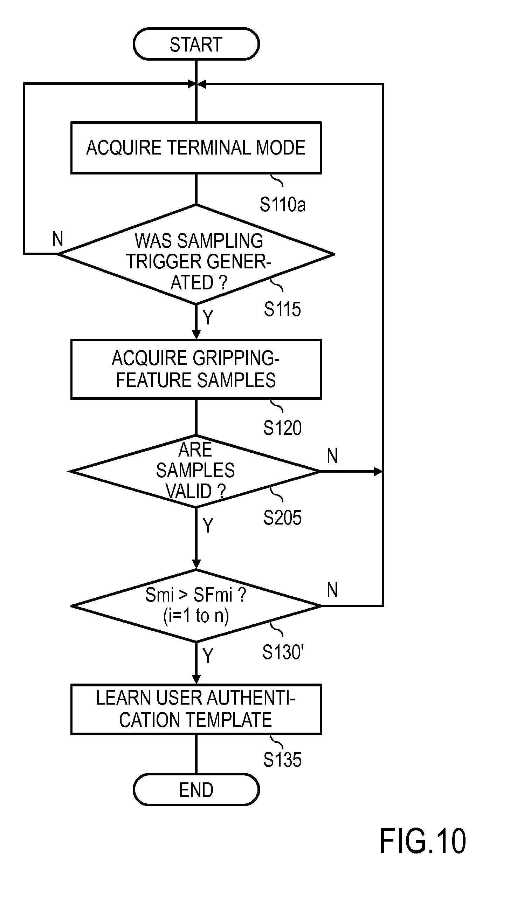

The operation of the portable terminal 200" according to the third embodiment in a learning state will be described first with reference to Fig. 6 and Fig. 10. Fig. 6 is a block diagram showing the structure of the portable terminal 200". Fig. 10 is a flowchart showing the operation of the portable terminal 200" in the learning state. As shown in Fig. 6, the portable terminal 200" of the present embodiment includes a pressure sensor array 105, a mode acquisition part 110, a trigger monitoring part 115, a gripping-feature sample acquisition part 120, an acceleration sensor 205, a switch 125, a temporary sample storage 130', a template learning part 135, a template storage 155, a tilt counter 210, a user authentication part 160, a score adder/subtractor 170, a threshold slider 220, a locking determination part 175 and a locking part 180. Since the operation of each part other than the trigger monitoring part 115 is exactly the same as that of the part having the same reference numeral in the second embodiment, a description thereof is omitted.

It is assumed here that the switch 125 is set to the learning state. The mode acquisition part 110 acquires the mode of the portable terminal 200" (S110a). The trigger monitoring part 115 outputs a gripping-feature acquisition signal when a sampling trigger determined in each mode is generated (Yes in S 115). If the sampling trigger is not generated, the processing returns to the start, and the mode acquisition part 110 newly acquires the mode of the portable terminal 200" (No in S115 and S110a).

The gripping-feature sample acquisition part 120 acquires the gripping-feature acquisition signal sent from the trigger monitoring part 115 to acquire gripping-feature samples from the pressure sensor array 105 (S120).

It is assumed here that the total number of modes is n (n is an integer equal to 1 or greater), the number of gripping-feature samples already acquired in the i-th mode is Smi, and the number of learning-start samples in the i-th mode is SFmi. Similarly to the above description, the number of learning-start samples, SFmi, means a predetermined number of samples for each mode that are required for learning the user authentication template. Consequently, when the number of gripping-feature samples, Smi, in all the modes (i = 1 to n) stored in the temporary sample storage 130' reaches the number of learning-start samples, SFmi, (Smi$\geq$ SFmi), the processing proceeds to step S135, and the template learning part 135 learns the user authentication template with the gripping-feature samples in each mode and stores the learned user authentication templates in the template storage 155 (Yes in S130', and S135). If the number of gripping-feature samples, Smi, in all the modes (i = 1 to n) stored in the temporary sample storage 130' does not reach the number of learning-start samples, SFmi, (Smi < SFmi), the processing returns to the start, and subsequently the operations to acquire the mode of the terminal and acquire gripping-feature samples simultaneously with generation of a sampling trigger are repeated (No in S130'). Hence, S110a, S115, S120 and S205 are repeated until authentication templates are obtained for all of the modes (i = 1 to n) (No in S130').

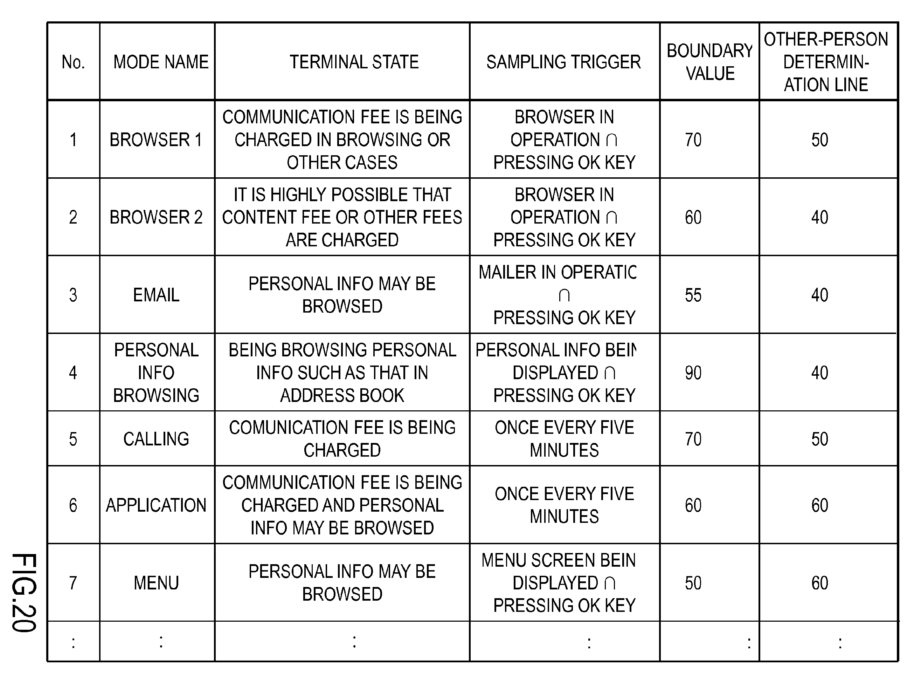

Sampling triggers will be described with reference to Fig. 20. Fig. 20 is a view illustrating examples of the kinds of modes, as well as terminal states, sampling triggers, boundary values and other-person determination lines in the respective modes. The boundary values are described later. As described earlier, the modes include, for example, the browser 1 mode, the browser 2 mode, the email mode, the personal information browsing mode, the calling mode, the application mode, and the menu mode. The sampling trigger specified for the browser 1 mode is "browser in operation ∩ pressing OK key". This means that, when the user presses an OK key in the portable terminal 200" if the browser is in operation, the operation is used as the sampling trigger, and gripping-feature samples are acquired. The sampling trigger specified for the browser 2 mode is "browser in operation ∩ pressing OK key". This is the same as in the browser 1 mode.

The sampling trigger specified for the email mode is "mailer in operation ∩ pressing OK key". This means that, when the user presses the OK key in the portable terminal 200" if the mailer is in operation, the operation is used as the sampling trigger, and gripping-feature samples are acquired. The sampling trigger specified for the personal information browsing mode is "personal information being displayed ∩ pressing OK key". This means that, when the user presses the OK key in the portable terminal 200" if personal information, such as an address book, is being displayed, the operation is used as the sampling trigger, and gripping-feature samples are acquired. Pressing the OK key is just an example of a sampling trigger caused by pressing a key. Depending on the mode, pressing any operating key may be specified as a sampling trigger.

Unlike in the modes described above, operating keys such as the OK key are not pressed much in some modes. For example, in the calling mode, since operating keys are not pressed much, a sampling trigger is generated automatically once every five minutes to acquired gripping-feature samples, without depending on the pressing of operating keys. In the application mode, since different operating keys are pressed depending on the application, a sampling trigger is automatically generated once every five minutes. The time period of five minutes in which the sampling trigger is generated automatically is just an example, and any time period appropriate for the mode and the type of the portable terminal may be specified. In the menu mode, "menu screen being displayed ∩ pressing OK key" is specified as the sampling trigger.

As described above, by specifying the timing at which a stable gripping state is expected as the sampling trigger in a mode, stable gripping-feature samples can be acquired with low variations. As described earlier, since the user unconsciously generates the sampling trigger in each mode in the portable terminal, and gripping-features are automatically acquired at the timing when the sampling trigger is generated, precise gripping-feature samples are acquired.

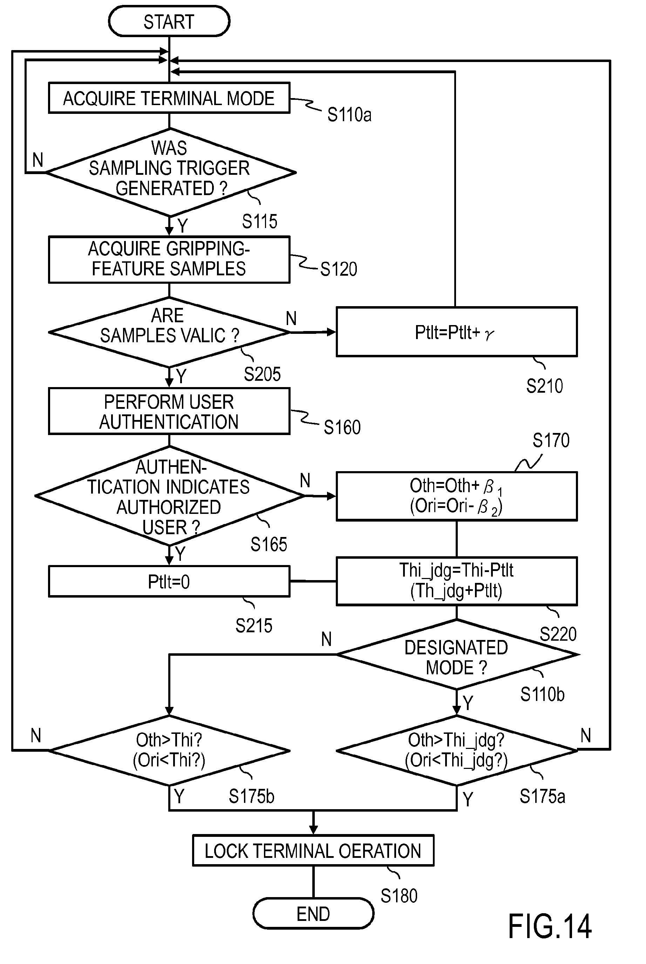

Next, with continuing reference to Fig. 6 and to Fig. 14 newly, the operation of the portable terminal 200" in the authentication state according to the third embodiment will be described. Fig. 14 is a flowchart showing the operation of the portable terminal 200" in the authentication state according to the present embodiment. In the same way as in the operation in the learning state of the present embodiment, the only difference from the second embodiment is that S115 is performed prior to step S120. The mode acquisition part 110 acquires the mode of the portable terminal 200" (S110a). If the sampling trigger specified in each mode is generated, the trigger monitoring part 115 outputs the gripping-feature acquisition signal (Yes in S115). If the sampling trigger is not generated, the processing returns to the start, and the mode acquisition part 110 newly acquires the mode of the portable terminal 200" (No in S115, S110a). In response to the gripping-feature acquisition signal sent from the trigger monitoring part 115, the gripping-feature sample acquisition part 120 acquires gripping-feature samples from the pressure sensor array 105 (S120). Since subsequent processes are the same as those in and after step S205 in the authentication state of the portable terminal 200' of the second embodiment, a description thereof is omitted.

[Fourth Embodiment]

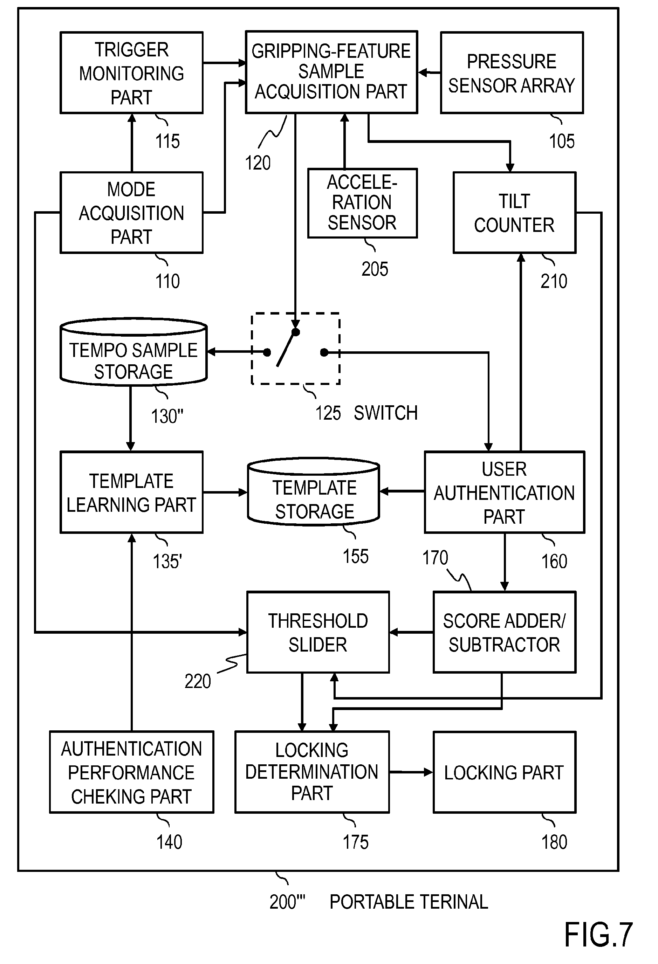

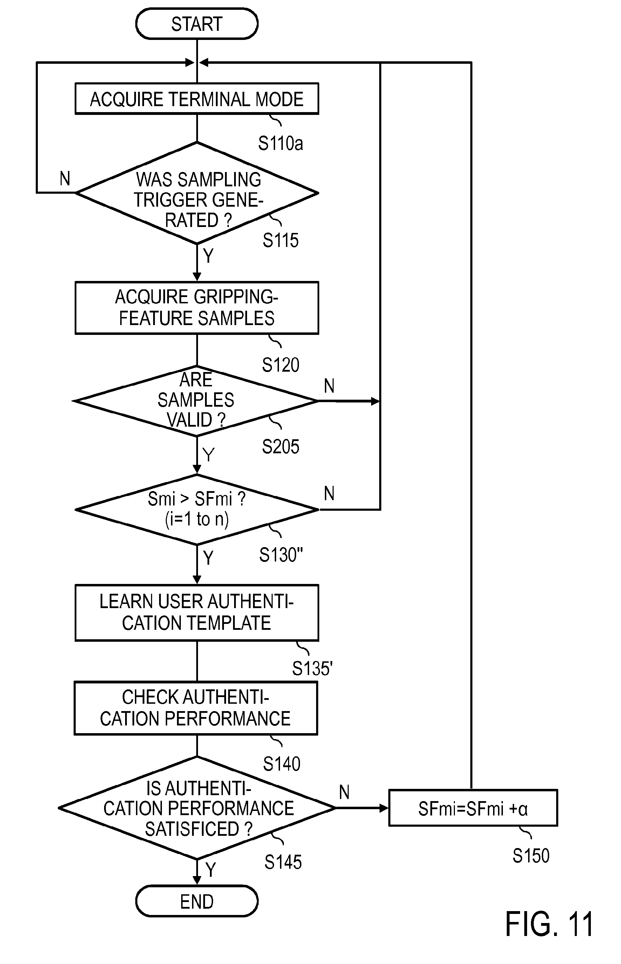

A portable terminal 200'" according to a fourth embodiment, which is an example terminal in which the user authentication template learning function of the portable terminal 200" according to the third embodiment, described above, has been further improved, will be described in detail. First, operations in the learning state of the portable terminal 200'" according to the fourth embodiment will be described with reference to Fig. 7 and Fig. 11. Fig. 7 is a block diagram showing the structure of the portable terminal 200'". Fig. 11 is a flowchart showing the operation of the portable terminal 200'" in a learning state. As shown in Fig. 7, the portable terminal 200'" of the present embodiment includes a pressure sensor array 105, a mode acquisition part 110, a trigger monitoring part 115, a gripping-feature sample acquisition part 120, an acceleration sensor 205, a switch 125, a temporary sample storage 130", a template learning part 135', a template storage 155, a tilt counter 210, a user authentication part 160, a score adder/subtractor 170, a threshold slider 220, a locking determination part 175, a locking part 180 and an authentication performance checking part 140. Since the operation of each part other than the temporary sample storage 130", the template learning part 13 5' and the authentication performance checking part 140 is exactly the same as that of the part having the same reference numeral in the third embodiment, a description thereof is omitted.

It is assumed here that the switch 125 is set to the learning state. The temporary sample storage 130" stores acquired gripping-feature samples by allocating the acquired gripping-feature samples to either "samples for learning" or "samples for performance verification" for each mode. The fourth embodiment differs from the third embodiment in this respect. The term "samples for learning" refers to gripping-feature samples to be used for generating user authentication templates. The term "samples for performance verification" refers to gripping-feature samples that are used to check the authentication performance as described later. Further, it is assumed that the authentication performance checking part 140 previously stores "other-person samples" in addition to the aforementioned two kinds of allocated gripping-feature samples. The term "other-person sample" refers to a gripping-feature sample acquired when a person other than the authorized user gripped the portable terminal 200'". The other-person samples can be acquired, for example, by causing multiple people other than the authorized user to grip the portable terminal 200'" at the time of factory shipment of the portable terminal 200'" to thereby acquire a fixed number of gripping-feature samples of people other than the authorized user, and storing the acquired gripping-feature samples in advance in the authentication performance checking part 140 as other-person samples. Further, a configuration may also be adopted in which gripping-feature samples (other-person samples) of people other than the authorized user are stored on a network, and the authentication performance checking part 140 can acquire the other-person samples by accessing the network.

First, the mode acquisition part 110 acquires the mode of the portable terminal 200'" (S110a). The trigger monitoring part 115 outputs a gripping-feature acquisition signal when a sampling trigger determined depending on the mode is generated (Yes in S115). In contrast, if a sampling trigger is not generated, the processing returns to the start, and the mode acquisition part 110 newly acquires the mode of the portable terminal 200'" (No in S115, and S110a). The gripping-feature sample acquisition part 120 acquires the gripping-feature acquisition signal from the trigger monitoring part 115, and acquires gripping-feature samples from the pressure sensor array 105 (S120). The operations thus far are the same as operations when the portable terminal 200" of the third embodiment is in the learning state. The acquired gripping-feature samples are allocated to either "samples for learning" or "samples for performance verification" for each mode and stored in the temporary sample storage 130". When the number of gripping-feature samples (samples for learning), Smi, in all the modes (i = 1 to n) stored in the temporary sample storage 130" reaches the number of learning-start samples, SFmi, (Smi > SFmi), the processing proceeds to step S135', and the template learning part 135' learns the user authentication template with the gripping-feature samples in each mode and stores the learned user authentication templates in the template storage 155 (Yes in S130", and S135'). If the number of gripping-feature samples (samples for learning), Smi, in all the modes (i = 1 to n) stored in the temporary sample storage 130" does not reach the number of learning-start samples, SFmi, (Smi < SFmi), the processing returns to the start, and subsequently the operations to acquire the mode of the terminal and acquire gripping-feature samples simultaneously with generation of a sampling trigger are repeated (No in S130", and S110a to S205). The user authentication template is generated from the average of the samples for learning and other factors.

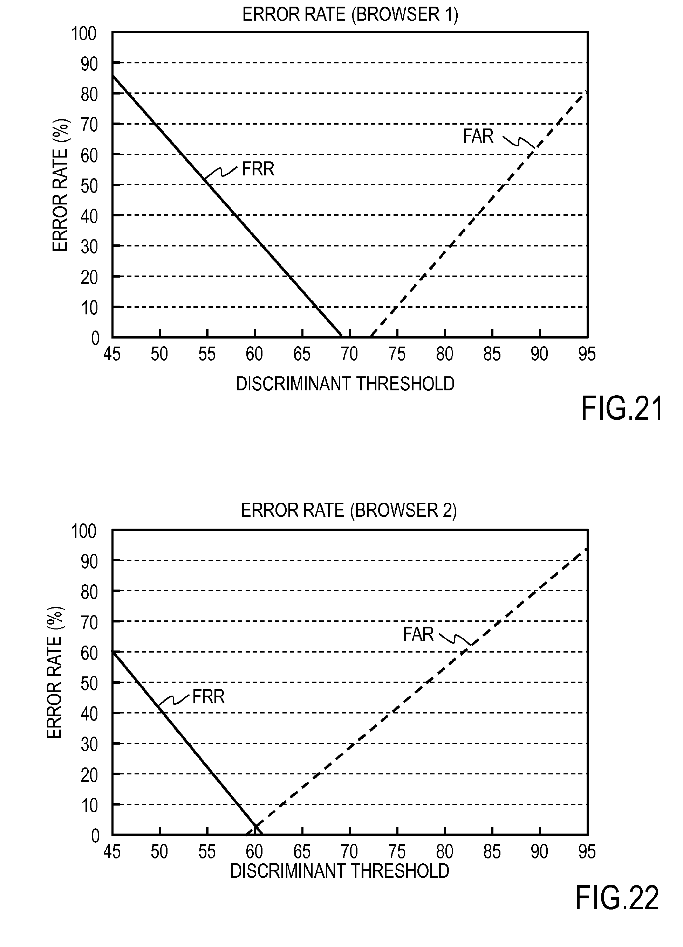

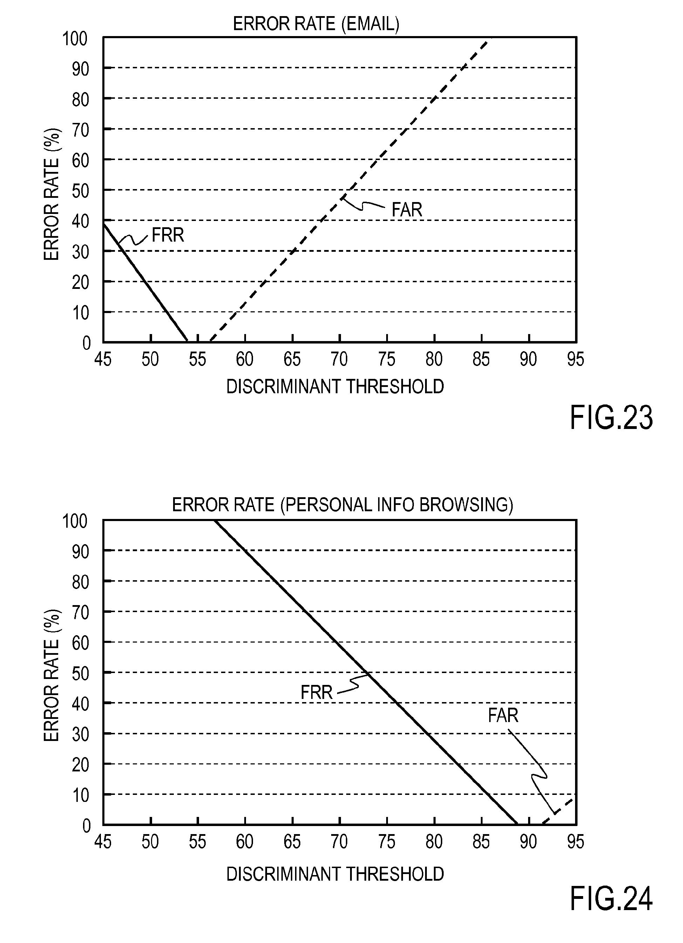

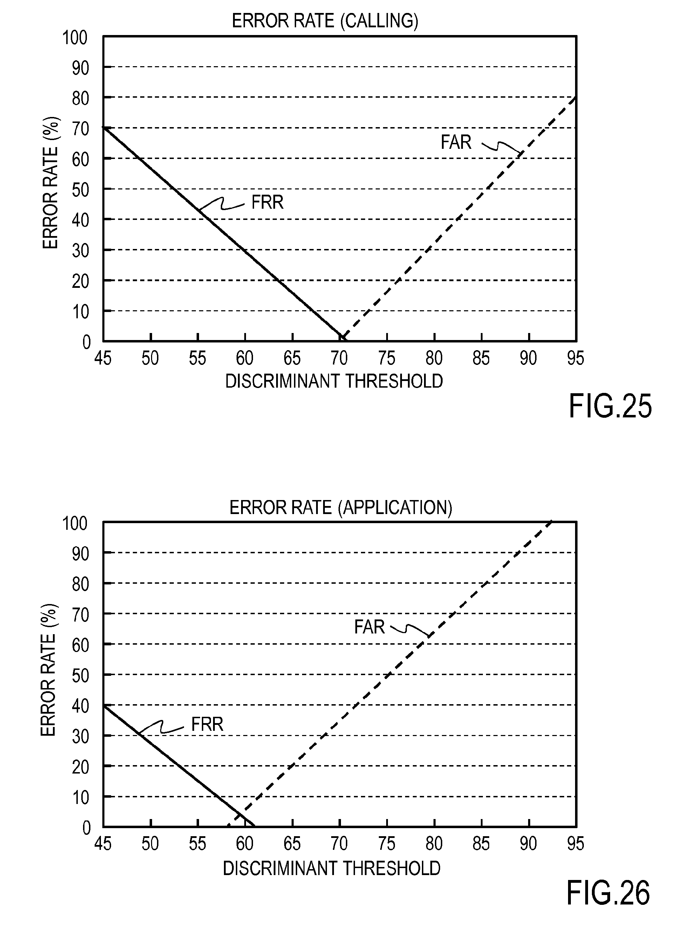

Next, the operations of the authentication performance checking part 140 will be described in detail. The authentication performance checking part 140 calculates the respective distances between the user authentication template and samples for performance verification, and the respective distances between the user authentication template and the other-person samples. As described above, Mahalanobis's generalized distance or the like can be used as the distance in this case. Based on the distribution of the distances between the user authentication template and the samples for performance verification, the authentication performance checking part 140 takes a certain distance value as an upper limit (this upper limit distance value is referred to hereunder as "discriminant threshold") and determines the relationship between the discriminant threshold and a false rejection rate (FRR) in a case where samples for performance verification for which the aforementioned distance is greater than or equal to the discriminant threshold are erroneously determined to not be the authorized person. Similarly, based on the distribution of the distances between the user authentication template and the other-person samples, the authentication performance checking part 140 takes the discriminant threshold as an upper limit and determines the relationship between the discriminant threshold and a false acceptance rate (FAR) in a case where other-person samples for which the aforementioned distance is less than or equal to the discriminant threshold are erroneously determined to be the authorized person. This will be explained in detail using examples shown in Fig. 21 to Fig. 26.

Figs. 21 to 26 are example views showing a relationship between a discriminant threshold and an error rate in a browser 1 mode, a browser 2 mode, an email mode, a personal information browsing mode, a calling mode and an application mode, respectively. The horizontal axis of the respective graphs indicates the discriminant threshold, and the vertical axis indicates the error rate (false rejection rate or false acceptance rate). In each graph, a thick solid line indicates the false rejection rate (FRR), and a thick dashed line indicates the false acceptance rate (FAR). For example, referring to the graph of the error rate for browser 1 shown in Fig. 21, the false rejection rate (FRR) decreases as the discriminant threshold increases, and becomes 0 when the discriminant threshold is a little less than 70. This means that in the distribution of distances between the user authentication template and the samples for performance verification, there were no samples for performance verification having a distance exceeding 70. Similarly, when the discriminant threshold exceeds 73, the false acceptance rate (FAR) starts to increase from 0. This means that in the distribution of distances between the user authentication template and the other-person samples, there were no other-person samples having a distance less than 73. Since a state in which the false rejection rate and the false acceptance rate are both 0 is the most desirable, it is found that it is most suitable to set the boundary value of the discriminant threshold (hereunder, referred to as simply "boundary value") in the browser 1 mode to a value from 70 to 72. Thus, in the browser 1 mode, both the false rejection rate (FRR) and the false acceptance rate (FAR) can be made 0 by setting the boundary value to a value from 70 to 72.

On the other hand, in the browser 2 mode, there is no boundary value at which the FRR and FAR are 0 at the same time. Since the graph (thick solid line) of the false rejection rate (FRR) and the graph (thick dashed line) of the false acceptance rate (FAR) intersect in the first quadrant, there is no condition under which they both become 0. In this case, a discriminant threshold at a position at which the graph (thick solid line) of the false rejection rate (FRR) and the graph (thick dashed line) of the false acceptance rate (FAR) intersect can be used as the boundary value. If the boundary value is set to 60 in the example of the browser 2 mode shown in Fig. 22, the false rejection rate (FRR) and the false acceptance rate (FAR) can each be suppressed to a low value and the authentication accuracy can be raised. However, if the error rate is in a high state at the position at which the graph (thick solid line) of the false rejection rate (FRR) and the graph (thick dashed line) of the false acceptance rate (FAR) intersect, high accuracy can not be expected even if a discriminant threshold at this position is set as the boundary value. For example, if a case is assumed in which the graph (thick solid line) of the false rejection rate (FRR) and the graph (thick dashed line) of the false acceptance rate (FAR) intersect at a position at which the error rate is 40%, even if the discriminant threshold at the intersecting position is set as the boundary value, the accuracy will be noticeably low since the probability of the authorized user being erroneously rejected as an unauthorized person and the probability of an unauthorized person being accepted as an authorized user are always 40%, respectively, at that boundary value. This is a phenomenon that occurs because the number of gripping-feature samples is insufficient, and the phenomenon can be eliminated by additionally acquiring a large number of gripping-feature samples. This problem can be solved by increasing the number of gripping-feature samples until a boundary value can be set at which the FRR and the FAR become equal to or less than a predetermined probability (for example, 5%). Thus, as illustrated in Fig. 20, the boundary value of the browser 1 mode can be set to 70, the boundary value of the browser 2 mode can be set to 60, the boundary value of the email mode can be set to 55, the boundary value of the personal information browsing mode can be set to 90, the boundary value of the calling mode can be set to 70 and the boundary value of the application mode can be set to 60 and the like so that the FRR and the FAR become equal to or less than a predetermined probability.

Accordingly, the authentication performance checking part 140 checks the relationship between the discriminant threshold and the error rate in each of the aforementioned modes (S 140), and if a boundary value does not exist at which the FRR and the FAR are equal to or less than a predetermined probability (for example, 5%) (No in S145), the number of learning-start samples SFmi is made equal to SFmi+$\alpha$ and the processing returns to the start (S150). Here, $\alpha$ is an integer that is equal to or greater than 1. The steps S110a to S130" are repeated until the newly added $\alpha$ gripping-feature samples (samples for learning) are acquired. When the additional $\alpha$ gripping-feature samples (samples for learning) have been acquired, the processing proceeds to step S135' to learn a user authentication template. Next, similarly to the above described processing, the authentication performance checking part 140 checks the relationship between the discriminant threshold and the error rate in each of the modes (S140), and determines whether or not a boundary value at which the FRR and the FAR are equal to or less than a predetermined probability (for example, 5%) exists (S145). If a boundary value at which the FRR and the FAR are equal to or less than the predetermined probability exists (Yes in S145), the learning operation is ended (End). If a boundary value at which the FRR and the FAR are equal to or less than the predetermined probability does not exist (No in S145), the processing proceeds to step S150 to make the number of learning-start samples SFmi = SFmi+$\alpha$ and then returns to the start (S150). Thus, by additionally acquiring gripping-feature samples until satisfying a predetermined authentication performance (FRR and FAR are equal to or less than a fixed value), highly accurate authentication in which both the false rejection rate and the false acceptance rate are low can be realized.

Next, a difference between the authentication state of the portable terminal 200''' of the present embodiment and the authentication state of the portable terminal 200 of the first embodiment will be described. The user authentication part 160 of the portable terminal 200 of the first embodiment determines that an acquired gripping-feature sample is not that of the authorized person unless a distance between the user authentication template and the gripping-feature sample that is acquired in the authentication state is equal to or less than a predetermined value. In the present embodiment, the aforementioned boundary value is set as the "predetermined value". The other operations in the authentication state of the present embodiment are the same as operations in the authentication state of the portable terminal 200'' of the third embodiment, and hence a description thereof is omitted.

In the descriptions of the embodiments, the first embodiment was used as a basic frame; the second embodiment was made by adding the mode acquisition part 110 thereto; the third embodiment was made by adding the trigger monitoring part 115 to the second embodiment; and the fourth embodiment was made by adding the authentication performance checking part 140 to the third embodiment, but the combination is not limited to those described above. It is possible to add only the trigger monitoring part 115 to the first embodiment. It is possible to add only the authentication performance checking part 140 to the first embodiment. It is possible to add only the trigger monitoring part 115 and the authentication performance checking part 140 to the first embodiment. It is possible to add only the authentication performance checking part 140 to the second embodiment.

Each type of processing described above may be executed not only time sequentially according to the order in the description but also in parallel or individually when necessary or according to the processing capability of each apparatus that executes the processing. Appropriate changes can be made to the present invention without departing from the scope of the present invention.

When the configurations described above are implemented by a computer, the processing details of the functions that should be provided by each apparatus are described in a program. When the program is executed by the computer, the processing functions are implemented on the computer.

The program containing the processing details can be recorded in a computer-readable recording medium. The computer-readable recording medium can be any type of medium, such as a magnetic recording device, an optical disc, a magneto-optical recording medium, or a semiconductor memory.

The program is distributed by selling, transferring, or lending a portable recording medium, such as a DVD or a CD-ROM, with the program recorded on it, for example. The program may also be distributed by storing the program in a storage unit of a server computer and transferring the program from the server computer to another computer through a network.

A computer that executes this type of program first stores the program recorded on a portable recording medium or the program transferred from the server computer in its storage unit. Then, the computer reads the program stored in its storage unit and executes processing in accordance with the read program. In a different program execution form, the computer may read the program directly from the portable recording medium and execute processing in accordance with the program, or the computer may execute processing in accordance with the program each time the computer receives the program transferred from the server computer. Alternatively, the above-described processing may be executed by a so-called application service provider (ASP) service, in which the processing functions are implemented just by giving program execution instructions and obtaining the results without transferring the program from the server computer to the computer. The program of this form includes information that is provided for use in processing by the computer and is treated correspondingly as a program (something that is not a direct instruction to the computer but is data or the like that has characteristics that determine the processing executed by the computer).

In the description given above, each apparatus is implemented by executing the predetermined program on the computer, but at least a part of the processing may be implemented by hardware.

**Claims**

1. A mobile information terminal that acquires gripping-feature samples when being gripped and that performs user authentication, the terminal comprising:

    a gripping-feature sample acquisition part configured to acquire the gripping-feature samples;
    a disturbance sensor configured to detect a disturbance when the gripping-feature sample acquisition part acquires the gripping-feature samples;
    a switch configured to switch the mobile information terminal between a learning state and an authentication state;
    a template learning part configured to learn a user authentication template by using the gripping-feature samples, when the mobile information terminal is in the learning state;
    a tilt counter configured to add a tilt score when the mobile information terminal is in the authentication state and the detected disturbance is a predetermined condition, and to reset the tilt score to 0 when a result of user authentication indicates an authorized user;
    a user authentication part configured to compare the learned user authentication template with the gripping-feature samples to perform the authentication, when the mobile information terminal is in the authentication state;
    a score adder/subtractor configured to add/subtract a score when the mobile information terminal is in the authentication state and a result of user authentication that the user authentication part performs indicates an unauthorized user;
    a threshold slider configured to add/subtract the tilt score to/from a predetermined threshold to calculate a revised threshold, when the mobile information terminal is in the authentication state;
    a locking determination part configured to determine that the user authentication fails when the score changes across the revised threshold; and

a locking part configured to lock some or all functions of the mobile information terminal when the user authentication fails.

2. The mobile information terminal according to Claim 1, further comprising a mode acquisition part configured to acquire a mode of the mobile information terminal,
wherein the locking determination part is configured to, when a mode that the mode acquisition part acquires is a predetermined mode, determine that user authentication fails when the score changes across the revised threshold, and when a mode that the mode acquisition part acquires is not a predetermined mode, determine that user authentication fails when the score changes across the threshold.

3. The mobile information terminal according to Claim 1 or 2, wherein the template learning part is configured to learn a user authentication template using only gripping-feature samples acquired at a time that the detected disturbance is not a predetermined condition.

4. A gripping-feature authentication method for acquiring gripping-feature samples when a mobile information terminal is gripped and for performing user authentication using a user authentication template that is learned using the acquired gripping-feature samples, the gripping-feature authentication method comprising:

   a gripping-feature sample acquisition step of acquiring the gripping-feature samples;
   a disturbance sensor step of detecting a disturbance when the gripping-feature samples are acquired in the gripping-feature sample acquisition step;
   a tilt counter step of, if the detected disturbance is a predetermined condition, adding a tilt score, and if a result of user authentication indicates an authorized user, resetting the tilt score to 0;
   a user authentication step of comparing the learned user authentication template with the gripping-feature samples to perform the authentication;
   a score addition/subtraction step of adding/subtracting a score when a result of the user authentication indicates an unauthorized user;
   a threshold slider step of adding/subtracting the tilt score to/from a predetermined threshold to calculate a revised threshold;
   a locking determination step of determining that the user authentication fails when the score changes across the revised threshold; and
   a locking step of locking some or all functions of the mobile information terminal when the user authentication fails.

5. The gripping-feature authentication method according to Claim 4, further comprising a mode acquisition step of acquiring a mode of the mobile information terminal,
wherein, when the mode that is acquired in the mode acquisition step is a predetermined mode, the locking determination step determines that user authentication fails when the score changes across the revised threshold, and when the mode that is acquired in the mode acquisition step is not a predetermined mode, the locking determination step determines that user authentication fails when the score changes across the threshold.

6. A gripping-feature learning method for acquiring gripping-feature samples when a mobile information terminal is gripped and for learning a user authentication template, the gripping-feature learning method comprising:

   a gripping-feature sample acquisition step of acquiring the gripping-feature samples;
   a disturbance sensor step of detecting a disturbance when the gripping-feature samples are acquired in the gripping-feature sample acquisition step; and
   a template learning step of learning a user authentication template using only gripping-feature samples that are acquired when the detected disturbance is not a predetermined condition.

7. A computer-readable recording medium having recorded thereon a program for executing the method according to one of Claims 4 to 6.

16  LIQUID CRYSTAL DISPLAY

11  KEY ARRANGED FACE

LEFT SIDE FACE  12

15
BOTTOM FACE

200    PORTABLE TERMINAL
(200')
(200")
(200''')

FIG.1

MEASUREMENT RESULT OF GRIPPING-PRESSURE DISTRIBUTION ON FACE 12

MEASUREMENT RESULT OF GRIPPING-PRESSURE DISTRIBUTION ON FACE 14

MEASUREMENT RESULT OF GRIPPING-PRESSURE DISTRIBUTION ON FACE 13

FIG.2

FIG.3A

NOTIFICATION
16-2

2/21
thu    16:40

HABITS OF XXXX WILL
BE MEMORIZED.
PREVENT OTHER
PERSONS FROM USING
THIS TERINAL DURING
LEARNING PERIOD.

16
LIQUID CRYSTAL
DISPLAY

16-1
AGENT

FIG.3B

NOTIFICATION
16-3

3/1
fri    08:15

HABITS OF XXXX
HAVE BEEN MEMORIZED.
FROM NOW ON, YOU CAN
AUTHENTICATE YOURSELF
JUST BY GRIPPING THIS
TERMINAL.

16
LIQUID CRYSTAL
DISPLAY

16-1
AGENT

GRIPPING-FEATURE SAMPLE ACQUISITION PART

120

PRESSURE SENSOR ARRAY

105

ACCELE-RATION SENSOR

205

TILT COUNTER

210

TEMPO SAMPLE STORAGE

130

125 SWITCH

TEMPLATE LEARNING PART

135

TEMPLATE STORAGE

155

USER AUTHENTI-CATION PART

160

THRESHOLD SLIDER

220

170

SCORE ADDER/SUBTRACTOR

LOCKING DETERMINATION PART

175

LOCKING PART

180

200 PORTABLE TERMINAL

FIG.4

FIG.5

FIG.6

TRIGGER
MONITORING
PART
115

GRIPPING-FEATURE
SAMPLE
ACQUISITION PART
120

PRESSURE
SENSOR ARRAY
105

MODE
ACQUISITION
PART
110

ACCELE-
RATION
SENSOR
205

ティルト
カウンタ
210

TEMPO SAMPLE
STORAGE
130'

125  SWITCH

TEPLATE
LEARNING PART
135

TEMPLATE
STORAGE
155

USER
AUTHENTI-
CATION PART
160

170

THRESHOLD
SLIDER
220

SCORE ADDER/
SUBTRACTOR

LOCKING
DETERMINATION
PART
175

LOCKING PART
180

200"  PORTABLE TERMINAL

FIG.7

START

ACQUIRE GRIPPING-
FEATURE SAMPLES

S120

Sm > SFm ?    N

Y    S130

LEARN USER AUTHENTICATION
TEMPLATE

S135

END

FIG.8

START

ACQUIRE GRIPPING-
FEATURE SAMPLES

S120

ARE
SAMPLES
VALID ?

N

S205

Y

Sm > SFm ?

N

S130'

Y

LEARN USER
AUTHENTICATION TEMPLATE

S135

END

FIG.9

FIG.10

START

ACQUIRE TERMINAL MODE

S110a

N ← WAS SAMPLING TRIGGER GENE-RATED ?

S115

Y

ACQUIRE GRIPPING-FEATURE SAMPLES

S120

ARE SAMPLES VALID ? → N

S205

Y

$S_{mi} > SF_{mi}$ ? (i=1 to n) → N

S130"

Y

LEARN USER AUTHENTI-CATION TEMPLATE

S135'

CHECK AUTHENTI-CATION PERFORMANCE

S140

IS AUTHENTI-CATION PERFORMANCE SATISFICED ? → N → $SF_{mi} = SF_{mi} + \alpha$

S150

S145

Y

END

FIG. 11

FIG.12

START

ACQUIRE TERMINAL MODE — S110a

ACQUIRE GRIPPING
FEATURE SAMPLES

S120

ARE SAMPLES
VALID ?

N → $Ptlt=Ptlt+\gamma$

S210

Y

S205

PERFORM USER
AUTHENTICATION

S160

AUTHENTI-
CATION INDICATES
AUTHORIZED
USER ?

N → $Oth=Oth+\beta_1$
$(Ori=Ori-\beta_2)$

S170

Y

S165

$Ptlt=0$ → $Thi\_jdg=Thi-Ptlt$
$(Th\_jdg+Ptlt)$

S215

S220

N

DESIGNATED
MODE ?

S110b

Y

N

$Oth>Thi?$
$(Ori<Thi?)$

N

$Oth>Thi\_jdg?$
$(Ori<Thi\_jdg?)$

N

Y

S175b

Y

S175a

LOCK TERMINAL OPERATION

S180

END

FIG.13

START

ACQUIRE TERMINAL MODE — S110a

WAS SAMPLING TRIGGER GENERATED ? — S115
N

ACQUIRE GRIPPING-FEATURE SAMPLES — S120
Y

ARE SAMPLES VALIC ? — S205
N → $PtIt=PtIt+\gamma$ — S210

PERFORM USER AUTHENTICATION — S160
Y

AUTHENTICATION INDICATES AUTHORIZED USER ? — S165
N → $Oth=Oth+\beta_1$ $(Ori=Ori-\beta_2)$ — S170

$PtIt=0$ — S215
Y

$Thi\_jdg=Thi-PtIt$ $(Th\_jdg+PtIt)$ — S220

DESIGNATED MODE ? — S110b
N

$Oth>Thi?$ $(Ori<Thi?)$ — S175b
N / Y

$Oth>Thi\_jdg?$ $(Ori<Thi\_jdg?)$ — S175a
N / Y

LOCK TERMINAL OERATION — S180

END

FIG.14

| NUMBER | MODE NAME | TERMINAL STATE | OTHER-PERSON DETERMIN-ATION LINE |
|---|---|---|---|
| 1 | BROWSER 1 | COMMUNICATION FEE IS BEING CHARGED IN BROWSING OR OTHER CASES | Th1=50 |
| 2 | BROWSER 2 | IT IS HIGHLY POSSIBLE THAT CONTENT FEE OR OTHER FEES ARE CHARGED | Th2=40 |
| 3 | EMAIL | PERSONAL INFO MAY BE BROWSED | Th3=40 |
| 4 | PERSONAL INFO BROWSING | BEING BROWSING PERSONAL INFO SUCH AS THAT IN ADDRESS BOOK | Th4=40 |
| 5 | MAKING CALLS | COMMUNICATION FEE IS BEING CHARGED. | Th5=50 |
| 6 | APPLICATION | COMMUNICATION FEE IS BEING CHARGED, AND PERSONAL INFO MAY BE BROWSED. | Th6=60 |
| 7 | MENU | PERSONAL INFO MAY BE BROWSED | Th7=60 |
| ... | ... | ... | ... |

FIG.15

Oth

Th$_1$

Th_jdg

Ptlt

$\beta_1$

TIME

| | MENUE SCREEN (7) | ADDRESS BOOK SCREEN (4) | DURING CALL SCREEN (5) | TERMINAL LOCKED |

## FIG.16

Ori

Th_jdg

$\beta_2$

Ptlt

Th$_2$

TIME

| | MENUE SCREEN (7) | ADDRESS BOOK SCREEN (4) | DURING CALL SCREEN (5) | TERMINAL LOCKED |

## FIG.17

Oth

Th7

Th4

Th4_jdg

⇩

Ptlt

TIME

| | MENUE SCREEN (7) | ADDRESS BOOK SCREEN (4) | TERMINAL LOCKED |

FIG.18

Ori

Th4_jdg

Th4

⇧

Ptlt

Th7

TIME

| | MENUE SCREEN (7) | ADDRESS BOOK SCREEN (4) | TERMINAL LOCKED |

FIG.19

| No. | MODE NAME | TERMINAL STATE | SAMPLING TRIGGER | BOUNDARY VALUE | OTHER-PERSON DETERMINATION LINE |
|---|---|---|---|---|---|
| 1 | BROWSER 1 | COMMUNICATION FEE IS BEING CHARGED IN BROWSING OR OTHER CASES | BROWSER IN OPERATION ∩ PRESSING OK KEY | 70 | 50 |
| 2 | BROWSER 2 | IT IS HIGHLY POSSIBLE THAT CONTENT FEE OR OTHER FEES ARE CHARGED | BROWSER IN OPERATION ∩ PRESSING OK KEY | 60 | 40 |
| 3 | EMAIL | PERSONAL INFO MAY BE BROWSED | MAILER IN OPERATIO ∩ PRESSING OK KEY | 55 | 40 |
| 4 | PERSONAL INFO BROWSING | BEING BROWSING PERSONAL INFO SUCH AS THAT IN ADDRESS BOOK | PERSONAL INFO BEIN DISPLAYED ∩ PRESSING OK KEY | 90 | 40 |
| 5 | CALLING | COMMUNICATION FEE IS BEING CHARGED | ONCE EVERY FIVE MINUTES | 70 | 50 |
| 6 | APPLICATION | COMMUNICATION FEE IS BEING CHARGED AND PERSONAL INFO MAY BE BROWSED | ONCE EVERY FIVE MINUTES | 60 | 60 |
| 7 | MENU | PERSONAL INFO MAY BE BROWSED | MENU SCREEN BEIN DISPLAYED ∩ PRESSING OK KEY | 50 | 60 |
| .. | .. | .. | .. | .. | .. |

FIG.20

FIG.21

FIG.22

ERROR RATE (EMAIL)

FIG.23

ERROR RATE (PERSONAL INFO BROWSING)

FIG.24

ERROR RATE (CALLING)

FIG.25

ERROR RATE (APPLICATION)

FIG.26

## INTERNATIONAL SEARCH REPORT

| International application No. |
|---|
| PCT/JP2012/050710 |

### A. CLASSIFICATION OF SUBJECT MATTER
*G06F21/20*(2006.01)i, *H04L9/32*(2006.01)i, *H04M1/667*(2006.01)i

According to International Patent Classification (IPC) or to both national classification and IPC

### B. FIELDS SEARCHED

Minimum documentation searched (classification system followed by classification symbols)
G06F21/20, H04L9/32, H04M1/667, G06T1/00, G06N3/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2006-11591 A (Denso Corp.), 12 January 2006 (12.01.2006), claims 1, 4 (Family: none) | 1-7 |
| A | JP 2004-110196 A (Fuji Xerox Co., Ltd.), 08 April 2004 (08.04.2004), claim 1; paragraphs [0018] to [0021]; fig. 2 (Family: none) | 1-7 |
| A | JP 2006-79427 A (Toshiba Tec Corp.), 23 March 2006 (23.03.2006), claims 1, 3 (Family: none) | 1-7 |

☒ Further documents are listed in the continuation of Box C.  ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 09 April, 2012 (09.04.12) | 17 April, 2012 (17.04.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**EP 2 669 833 A1**

<table>
<tr><td colspan="2" align="center">**INTERNATIONAL SEARCH REPORT**</td><td>International application No.<br>PCT/JP2012/050710</td></tr>
</table>

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2007-156974 A  (KDDI Corp.),<br>21 June 2007 (21.06.2007),<br>claims 1, 8<br>(Family: none) | 1-7 |
| A | JP 2004-213087 A  (Toshiba Corp.),<br>29 July 2004 (29.07.2004),<br>claim 1<br>& US 2004/0125991 A1     & EP 1434163 A2<br>& EP 1903476 A2          & DE 60324246 D<br>& CA 2452188 A           & TW 250469 B<br>& KR 10-2004-0057942 A   & CN 1512452 A<br>& CA 2452188 A1 | 1-7 |

Form PCT/ISA/210 (continuation of second sheet) (July 2009)

**EP 2 669 833 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001142849 A